# EUROPEAN PATENT SPECIFICATION

(11) **EP 2 438 128 B1**
(45) Date of publication and mention of the grant of the patent: **03.04.2013**
(21) Application number: 10732525.0
(22) Date of filing: 24.05.2010
(51) Int. Cl.: C09J 7/02

(54) **STRETCH RELEASABLE PRESSURE-SENSITIVE ADHESIVES**
DURCH DEHNUNG LÖSBARE HAFTKLEBER
ADHÉSIFS SENSIBLES À LA PRESSION DÉCOLLABLES PAR ÉTIREMENT

(30) Priority: 04.06.2009 US 184213 P
(43) Date of publication of application: 11.04.2012
(73) Proprietor: 3M Innovative Properties Company, Saint Paul, MN 55133-3427 (US)
(72) Inventor: BHARTI, Vivek, Saint Paul, Minnesota 55133-3427 (US); TRAN, Thu-Van T., Saint Paul, Minnesota 55133-3427 (US); EMSLANDER, Jeffrey O., Saint Paul, Minnesota 55133-3427 (US); DETERMAN, Michael D., Saint Paul, Minnesota 55133-3427 (US)
(74) Representative: Vossius & Partner
(86) International application number: PCT/US2010/035903
(87) International publication number: WO 2010/141248

(56) References cited:
- EP-A2- 0 878 526
- GB-A- 1 440 409
- DATABASE WPI Week 199320 Thomson Scientific, London, GB; AN 1993-162244 XP002607199 & JP 5 093173 A (NITTO DENKO CORP) 16 April 1993 (1993-04-16)
- DATABASE WPI Week 197902 Thomson Scientific, London, GB; AN 1979-02642B XP002607200 & JP 53 134838 A (TOYO KAGAKU KK) 24 November 1978 (1978-11-24)

## Description

### Technical Field

An adhesive tape that is stretch releasable, articles that include the adhesive tape, methods of making both the adhesive tape, and uses of the adhesive tape are described.

### Background

Stretch releasable adhesive tapes have been used to bond an article to a substrate. The article is often a hook, clamp, hanger, or caddie and the substrate is often the surface of a wall. The article can be released from the substrate by stretching the adhesive tape.

### Summary

An adhesive tape that is stretch releasable, articles that contain the adhesive tape, and uses of the adhesive tape are disclosed. The adhesive tape includes a backing layer that is adjacent to at least one pressure-sensitive adhesive layer. The backing layer includes a poly(alkylene) copolymer. Each pressure-sensitive adhesive layer includes a polyisobutylene material. The adhesive tapes can be optically clear.

In a first aspect, an adhesive tape is described. The adhesive tape includes a (A) a backing layer and (B) at least one pressure-sensitive adhesive layer that is adjacent to a major surface of the backing layer. The backing layer contains a poly(alkylene) copolymer that is a polymerized product of a polymerizable reaction mixture that contains (1) a first alkene selected from ethene, propene, or a mixture thereof and (2) a second alkene selected from a 1,2-alkene having 4 to 8 carbon atoms. The backing layer has a haze no greater than 5 percent and a luminous transmittance equal to at least 85 percent as measured using method ASTM D 1003-07. The at least one pressure-sensitive adhesive layer contains a polyisobutylene material. The adhesive tape is stretchable at least 50 percent in a first direction without breaking.

In a second aspect, an article is described. In a first embodiment, the article includes a first substrate and an adhesive tape that is adhered to the first substrate. The adhesive tape includes (A) a backing layer, (B) a first pressure-sensitive adhesive layer that is adjacent to a first major surface of the backing layer, and (C) a tab that extends beyond the first substrate. Pulling the tab stretches the adhesive tape and releases the adhesive tape from the first substrate. The adhesive tape is stretchable at least 50 percent in a first direction without breaking. The backing layer contains a poly(alkylene) copolymer that is a polymerized product of a polymerizable reaction mixture that contains (1) a first alkene selected from ethene, propene, or a mixture thereof and (2) a second alkene selected from a 1,2-alkene having 4 to 8 carbon atoms. The backing layer has a haze no greater than 5 percent and a luminous transmittance equal to at least 85 percent as measured using method ASTM D 1003-07. The first pressure-sensitive adhesive layer contains a polyisobutylene material.

In a second embodiment, the article includes a first substrate, a second substrate, and an adhesive tape that is positioned between the first substrate and the second substrate. The adhesive tape couples the first substrate to the second substrate. The adhesive tape includes a (A) a backing layer, (B) a first pressure-sensitive adhesive layer that is adjacent to a first major surface of the backing layer and a second pressure-sensitive adhesive layer that is adjacent to a second major surface of the backing layer, and (C) a tab that extends beyond at least one of the first substrate and the second substrate. Pulling the tab stretches the adhesive tape and releases the adhesive tape from the first substrate, from the second substrate, or from both the first substrate and the second substrate. The adhesive tape is stretchable at least 50 percent in a first direction without breaking when the tab is pulled. The backing layer contains a poly(alkylene) copolymer that is a polymerized product of a polymerizable reaction mixture that includes (1) a first alkene selected from ethene, propene, or a mixture thereof and (2) a second alkene selected from a 1,2-alkene having 4 to 8 carbon atoms. The backing layer has a haze no greater than 5 percent and a luminous transmittance equal to at least 85 percent as measured using method ASTM D 1003-07. The first pressure-sensitive adhesive layer and the second pressure-sensitive adhesive layer each contain a polyisobutylene material.

The above summary of the present invention is not intended to describe each embodiment or every implementation of the present invention. The Figures, Detailed Description, and Examples that follow more particularly exemplify these embodiments.

### Brief Description of the Drawings

The invention may be more completely understood in consideration of the following detailed description of various embodiments of the invention in connection with the accompanying drawings, in which:
Figure 1 is a schematic diagram of an exemplary stretch releasable adhesive tape.
Figure 2 is a schematic diagram of an exemplary article that includes two substrates coupled together using the stretch releasable adhesive tape exemplified in Figure 1.
Figure 3 is a schematic diagram of another exemplary stretch releasable adhesive tape.
Figure 4 is a schematic diagram of another exemplary article that includes two substrates coupled together using the stretch releasable adhesive tape exemplified in Figure 3.

While the invention is amenable to various modifications and alternative forms, specifics thereof have been shown by way of example in the drawings and will be described in detail. It should be understood, however, that the intention is not to limit the invention to the particular embodiments described. On the contrary, the intention is to cover all modifications, equivalents, and alternatives falling within the spirit and scope of the invention.

### Detailed Description of the Invention

Adhesive tapes, articles containing the adhesive tapes, methods of making the adhesive tapes, and uses of the adhesive tapes are described. More particularly, the adhesive tapes include a backing layer and at least one pressure-sensitive adhesive layer adjacent to a major surface of the backing layer. The backing layer, which contains a poly(alkylene) copolymer, is typically optically clear. In many embodiments, the backing layer plus each pressure-sensitive adhesive layer is optically clear. The at least one pressure-sensitive adhesive layer contains a polyisobutylene material. The adhesive tape can be removed by stretching after being adhered to a substrate.

As used herein, the term "adhesive" and "pressure-sensitive adhesive" and "PSA" are used interchangeably. Likewise, the terms "adhesive layer" and "pressure-sensitive adhesive layer" and "PSA layer" are used interchangeably.

The term "homopolymer" refers to a polymeric material prepared from a single monomer and the term "copolymer" refers to a polymeric material prepared from at least two different monomers.

As used herein, the term "polyisobutylene material" refers one or more polyisobutylene homopolymers, one or more polyisobutylene copolymers, or a mixture thereof. The copolymers can be block copolymers or random copolymers. Typically, at least 70 weight percent, at least 75 weight percent, at least 80 weight percent, at least 85 weight percent, or at least 90 weight percent of the copolymers is formed from isobutylene.

As used herein, the term "first polyisobutylene" refers to a first polyisobutylene homopolymer, copolymer, or mixture thereof. The terms "second polyisobutylene" and "third polyisobutylene" are similarly defined.

As used herein, the term "in the range of" includes the endpoints and all values between the endpoints.

A stretch releasable adhesive tape is provided. The stretch releasable adhesive tape includes a backing layer and at least one pressure-sensitive adhesive layer adjacent to the backing layer. In some embodiments, the stretch releasable adhesive tape includes a single pressure-sensitive adhesive layer positioned adjacent to (e.g., adhered to) a first major surface of the backing layer. Such a stretch releasable adhesive tape can be placed on (e.g., adhered to) the outer surface of a substrate for any desired purpose. For example, the adhesive tape can provide a protective function and can be removed later if the protection is no longer needed or desired. In other examples, the adhesive tape can provide a writable or printable surface (e.g., the writing or printing can be on the backing layer). In some more specific examples, the adhesive tape can function as a label or price sticker that can be removed when no longer needed.

In other embodiments, the adhesive tape includes two pressure-sensitive adhesive layers that are positioned adjacent to (e.g., adhered to) opposite major surfaces of the backing layer. An adhesive tape with two pressure-sensitive adhesive layers can be used to couple two substrates together. If at any later time it is desirable to separate the first substrate from the second substrate, the adhesive tape can be stretched for removal (e.g., stretched to release the adhesive tape from the first substrate, from the second substrate, or from both the first and second substrates). The two substrates often can be separated without damaging either substrate. After separation from the adhesive tape and each other, the substrates can be used again. This is particularly advantageous when at least one of the substrates is expensive, fragile, or difficult to manufacture.

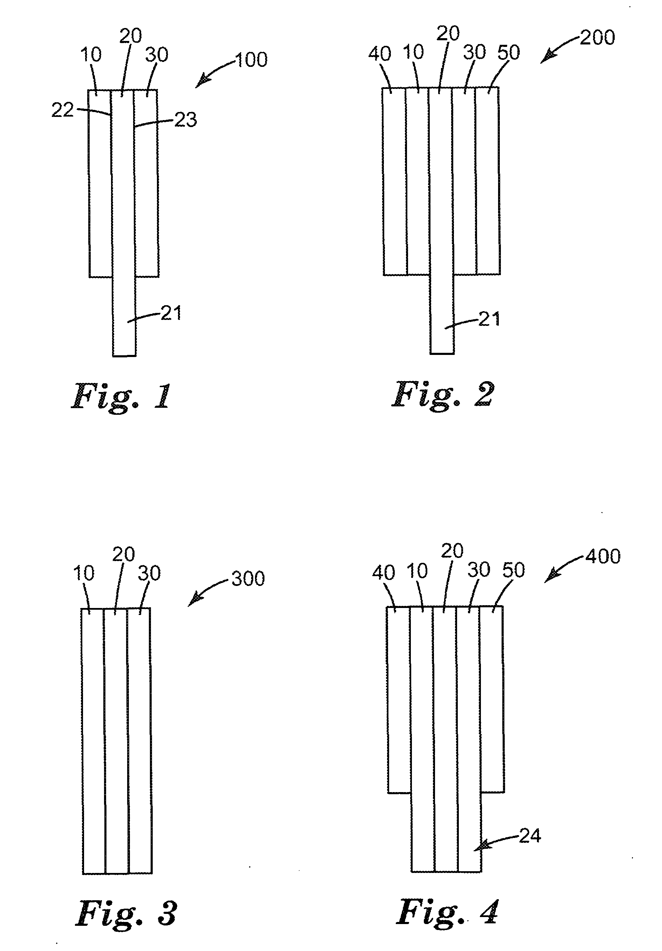

An exemplary stretch releasable adhesive tape construction with two pressure-sensitive adhesive layers is shown schematically in Figure 1. The adhesive tape 100 includes a backing layer 20 that is positioned between two pressure-sensitive adhesive layers 10 and 30. The first adhesive layer 10 is adjacent to a first major surface 22 of the backing layer 20 and the second adhesive layer 30 is adjacent to the second major surface 23 of the backing layer 20. The first major surface 22 of the backing layer 20 is opposite the second major surface 23 of the backing layer 20. As shown in Figure 1, the first adhesive layer 10 and the second adhesive layer 30 both contact the backing layer 20 and are directly adhered to the backing layer 20. In other embodiments that are not illustrated, the first adhesive layer 10 and the second adhesive layer 30 are indirectly adhered to the backing layer 20 through one or more intervening layers such as a primer layer. The backing layer 20 extends beyond both the first adhesive layer 10 and the second adhesive layer 30. The region of the backing layer 21 that extends beyond the adhesive layers can function as a tab 21. In Figure 1, the tab 21 is a part of the backing layer or an extension of the backing layer.

Figure 2 is exemplary schematic diagram of an article 200 that includes two substrates coupled using the stretch releasable adhesive tape shown schematically in Figure 1. The stretch releasable adhesive tape is positioned between a first substrate 40 and a second substrate 50. That is, the article 200 includes in the following order a first substrate 40, a first adhesive layer 10, a backing layer 20, a second adhesive layer 30, and a second substrate 50. The first adhesive layer 10 adheres to the first substrate 40 and the second adhesive layer 30 adheres to the second substrate 50. The pressure-sensitive adhesive layer typically can be adhered to a substrate with no more than finger pressure and can remain adhered to the substrate until the adhesive tape is stretched for removal. The first substrate 40 is coupled to the second substrate 50 through the adhesive tape.

In Figure 2, the backing layer 20 extends beyond both the first adhesive layer 10 and the second adhesive layer 30. The region of the backing layer that extends beyond both the first adhesive layer 10 and the second adhesive layer 30 can function as a tab 21 for stretch releasing the adhesive tape from both substrates 40 and 50. By pulling on the tab 21 and stretching the adhesive tape, the first adhesive layer 10 can be released from the first substrate 40, the second adhesive layer 30 can be released from the second substrate 50, or both adhesive layers 10 and 30 can be released from both substrates 40 and 50. The combined release allows the separation of the first substrate from the second substrate and the removal of the adhesive tape from between the first substrate and the second substrate.

Another stretch releasable adhesive tape 300 is shown schematically in Figure 3 that includes a backing layer 20 plus two pressure-sensitive adhesive layers 10 and 30. In this embodiment, the backing layer 20 does not extend beyond both the first adhesive layer 10 and the second adhesive layer 30. The use of this adhesive tape to couple a first substrate 40 and a second substrate 50 is shown schematically in Figure 4. A region of the adhesive tape (layers 10, 20, and 30) extends beyond both substrates 40 and 50. The region of the adhesive tape that extends beyond both substrates 40 and 50 can function as the tab 24. The tab 24 is tacky because the outer surfaces are the adhesive layers 10 and 30. Alternatively, an additional layer (not shown in Figure 3) such as a film or another non-tacky layer such as talc or ink (printed) can be placed over the adhesive layers 10 and 30 in the region of the tab to provide a non-tacky surface. By pulling on the tab 24 and stretching the adhesive tape, the first adhesive layer 10 can be released from the first substrate 40, the second adhesive layer 30 can be released from the second substrate 50, or both adhesive layers 10 and 30 can be released from both substrates 40 and 50. The combined release allows the separation of the first substrate from the second substrate and the removal of the adhesive tape (layers 10, 20, and 30) between the first substrate 40 and the second substrate 50.

With an adhesive tape, releasing the adhesive from one or both substrates includes pulling on a tab and stretching. The tab extends beyond at least one of the substrates. The tab can a part of the backing layer (i.e., an extension of the backing layer), a part of at least one adhesive layer (i.e., an extension of the adhesive layer), attached to the backing layer, attached to at least one adhesive layer, or a part of both the backing layer and at least one adhesive layer (i.e., an extension of both the backing layer and at least one adhesive layer). At least one substrate does not contact the adhesive layer in the region of the tab. Generally, if there are two substrates in the article, both substrates do not contact the adhesive layer in the region of the tab. The tab is usually pulled in a direction that is parallel to or substantially parallel to the surfaces of the substrates. That is, the tab is pulled in a direction that is 0 degrees, less than 5 degrees, less than 10 degrees, less than 15 degrees, less than 20 degrees, less than 25 degrees, less than 30 degrees, or less than 35 degrees from the surface of the substrate. The tab often includes a part of the backing layer. In some embodiments, the tab is formed from a second region of the backing layer that extends beyond a first region of the backing layer that is in contact with the adhesive layers. The tab is often non-tacky in these embodiments. In other embodiments, the tab includes the backing layer and at least one of the adhesive layers. The tab is often tacky in these embodiments. A tacky tab can be made non-tacky by covering the tab region with a non-tacky material.

The adhesive layers as well as backing layer of the adhesive tape are typically highly extensible. Pulling on the tab causes the adhesive tape to elongate or stretch. Stretching reduces the volume of the adhesive tape in the region between the first substrate and the second substrate and facilitates release of the adhesive tape from one or both substrates. Pulling on the tab can release the adhesive layers from both substrates if the adhesive layers have sufficient cohesive strength, if the adhesive layers adhere more strongly to the backing layer than to the substrates, and if the adhesive tape can be elongated sufficiently to reduce its volume between the substrates without breaking or snapping back into its original position or dimensions. The stretched adhesive tape can be removed from between the two substrates, the two substrates can be separated, or both. The adhesive tape typically can be stretched at least 50 percent in a first direction (often the first direction is lengthwise and the length can be increased at least 50 percent) without breaking or snapping under the stretch releasing conditions.

The backing layers shown schematically in Figure 1 and Figure 3 typically are optically clear. In many embodiments, the adhesive layers and the stretch releasable adhesive tape (i.e., the backing layer plus each pressure-sensitive adhesive layer) are also optically clear. As used herein, the term "optically clear" refers to a backing layer, an adhesive layer, or an adhesive tape that has a luminous transmittance of at least 85 percent and a haze no greater than 5 percent as measured using the method ASTM D 1003-07. With this method, measurements are made in the 400 to 700 nanometer wavelength range. The luminous transmittance is often equal to at least 88 percent, at least 90 percent, at least 91 percent, at least 92 percent, or at least 93 percent. The haze is often no greater than 4, no greater than 3, no greater than 2, or no greater than 1. Some exemplary adhesive tapes have a haze no greater than 3 percent and a luminous transmittance equal to at least 85 percent as measured using method ASTM D1003-07. Other exemplary adhesive tapes have a haze no greater than 2 percent and a luminous transmittance equal to at least 85 percent as measured using method ASTM D1003-07. Not all materials that are visibly clear are considered to be optically clear. That is, visible clarity is not always synonymous with optical clarity. A material that is visibly clear can have a haze value greater than 5, a luminous transmittance value less than 85 percent, or both.

In some articles, the stretch releasable adhesive tape is optically clear. That is, the backing layer plus each pressure-sensitive adhesive layer is optically clear. The optically clear adhesive tape can be positioned between two substrates such that the second substrate is visible when viewed through both the first substrate and the optically clear adhesive tape. If the adhesive tape is optically clear, the second substrate 50 in Figures 2 and 3 often can be viewed by looking through the first substrate 40 and the adhesive tape (as shown, the adhesive tape corresponds to layers 10, 20, and 30). For example, the optically clear adhesive tape can be used to couple a first substrate such as an optically clear substrate (e.g., a cover lens) to a second substrate such as a display (e.g., a liquid crystal display). If the coupling is not defective, the optically clear adhesive tape typically remains positioned between the first substrate and the display. If the coupling is defective, however, the adhesive tape can be removed without damaging the display by stretching. The adhesive tape can be replaced and the first substrate and the display can be coupled again with another optically clear, stretch releasable adhesive tape.

In addition to being optically clear, the backing layer is selected to have suitable mechanical properties for use in a stretch release adhesive tape. For example, the backing layer is selected so that it can be stretched (elongated) when pulled in a first direction (e.g., a lengthwise direction) at least 50 percent without breaking. That is, at least one dimension such as the length can be increased at least 50 percent through stretching without breaking the backing layer. In some embodiments, the backing layer can be stretched at least 100 percent, at least 150 percent, at least 200 percent, at least 300 percent, at least 400 percent, or at least 500 percent without breaking. The backing layer can often be stretched up to 1200 percent, up to 1000 percent, up to 800 percent, up to 750 percent, or up to 700 percent without breaking. These relatively large elongation values facilitate stretch releasing of the adhesive tape after being adhered to a substrate.

The Young's Modulus of the backing layer can be an indicator of the resistance of the backing layer to stretching. The Young's Modulus is often in the range of about 10 MPa to about 75 MPa. For example, the Young's Modulus can be in the range of 20 to 75 MPa, in the range of 20 to 60 MPa, in the range of 20 to 50 MPa, or in the range of 25 to 50 MPa. The Young's Modulus can be measured, for example, using method ASTM D790-07 or ASTM D882-02.

The tensile strength of the backing layer is an indicator of the load that the backing layer can sustain without breaking and is an indicator of how far the backing layer can be stretched without breaking. The tensile strength is typically in the range of about 10 MPa to about 60 MPa or higher. For example, the tensile strength can be in the range of 10 to 60 MPa, in the range of 10 to 50 MPa, in the range of 20 to 60 MPa, in the range of 20 to 55 mPa, or in the range of 25 to 50 MPa. The tensile strength can be measured using method ASTM D882-02.

The backing layer 20 that contains a poly(alkylene) copolymer can have the desired combination of optical clarity and mechanical properties. Suitable poly(alkylene) copolymers are a polymerized product a reaction mixture that includes (1) a first alkene selected from ethene, propene, or a mixture thereof and (2) a second alkene selected from a 1,2-alkene having 4 to 8 carbon atoms. In many poly(alkylene) copolymers, the 1,2-alkene is selected from butene, hexene, or octane. More particularly, many suitable poly(alkylene) copolymers are prepare from reaction mixtures that contain ethene and butane, ethene and hexane, or ethene and octane. The poly(alkylene) copolymers can be random copolymers or block copolymers. These copolymers are typically prepared using a metallocene catalyst. Multiple different poly(alkylene) copolymers can be included in the backing layer.

Not all poly(alkylene) copolymers are suitable for preparation of the backing layer. That is, not all known poly(alkylene) copolymers can be used to provide a backing layer having the combination of suitable mechanical and optical properties. Many poly(alkylene) copolymers with suitable mechanical properties do not have low haze (i.e., no greater than 5 percent as measured using method ASTM D1003-07) and high luminous transmittance (i.e., at least 85 luminous transmittance as measured using ASTM D1003-07) that is usually needed to prepare an optically clear backing layer. For example, the relatively large crystalline size of many poly(alkylene) copolymers, the use of various additives in many commercially available poly(alkylene) copolymers, and the specific methods used to form films of the poly(alkylene) copolymer can make then unsuitable for use as the optically clear backing layer.

The poly(alkylene) copolymer in the backing layer preferably has some crystalline material rather than being completely amorphous. The crystalline material tends to add strength to the backing layer by functioning as a physical crosslinker. If the size of the crystalline material is too large, however, the haze of the backing layer can be unacceptably large. The crystalline material preferably has a size that is less than a wavelength of visible light. In many embodiments of suitable poly(alkylene) copolymers, at least 95 percent of the crystalline material has a crystalline size less than 400 nanometers. For example, at least 95 percent of the crystalline material can have a crystalline size less than 300 nanometers, less than 200 nanometers, or less than 100 nanometers. A small crystalline size facilitates the formation of a backing layer that is optically clear.

Backing layers with crystalline material smaller than 400 nanometers can be prepared using various methods. In one method, the poly(alkylene) copolymers used to form the backing layer are melted, extruded, and quenched rapidly so that the alignment and growth of the crystals is minimized. In another method, seed materials (i.e., nucleating agents) can be added that facilitate the formation of many crystals within the copolymer upon cooling to form the solidified film. The formation of more crystals tends to favor smaller crystalline sizes. In yet another method, the copolymer composition is varied to alter the crystalline size. A greater amount of the second alkene monomer having 4 to 8 carbon atoms tends to result in a smaller crystalline size. The density or specific gravity tends to decrease as the amount of the second alkene monomer increases. The specific gravity is often no greater than 0.91. For example, the specific gravity is often no greater than 0.90 or no greater than 0.89. The specific gravity is often in the range of 0.86 to 0.91, in the range of 0.87 to 0.90, or in the range of 0.88 to 0.90.

The backing layer preferably is free or substantially free of additives that contribute to the haze or that lower the luminous transmittance. For example, the backing layer typically does not include an anti-blocking agent, a slip agent, or both. That is, the backing layer is usually free or substantially free of an anti-blocking agent, slip agent, or both. As used herein, the term "substantially free" with reference to the anti-blocking agent or to the slip agent means that these agents are each present in an amount no greater than 0.5 weight percent, no greater than 0.3 weight percent, no greater than 0.2 weight percent, no greater than 0.1 weight percent, no greater than 0.05 weight percent, or no greater than 0.01 weight percent. Anti-blocking agents are often added when films are prepared from poly(alkylene) copolymers to prevent the film from sticking to itself such as when formed into a roll. Exemplary anti-blocking agents include, but are not limited to, particles such as diatomaceous earth and talc. Slip agents are often added to reduce friction such as film-to-film friction in a roll or film-to-production equipment friction. The presence of these slip agents also can interfere with good adhesion to the at least one pressure-sensitive adhesive layer. Many commonly used slip agents are primary amides such as those made from long chain fatty acids by amidation. Examples of slip agents include, but are not limited to, stearamide, oleamide, and erucamide.

In many embodiments, the backing layer contains at least 99 percent poly(alkylene) copolymer. For example, the backing layer contains at least 99.1 weight percent, at least 99.2 weight percent, at least 99.3 weight percent, at least 99.4 weight percent, at least 99.5 weight percent, at least 99.6 weight percent, at least 99.7 weight percent, at least 99.8 weight percent, or at least 99.9 weight percent poly(alkylene) copolymer.

Exemplary poly(alkylene) copolymers that can be used to prepare optically clear backing layers are commercially available under the trade designation EXACT (e.g., EXACT 3024, 3040, 4011, 4151, 5181, and 8210) and VISTAMAXX (e.g., VISTAMAXX 6202, 6102, and 3000) from Exxon Mobil Chemical (Houston, TX). Other exemplary poly(alkylene) copolymers are commercially available under the trade designations AFFINITY (e.g., AFFINITY PT 1845G, PL 1845G, PF 1140G, PL 1850G, and PL 1880G), ENGAGE (e.g., ENGAGE 8003), and INFUSE (e.g., INFUSE D9530.05) from Dow Chemical (Midland, MI).

Many commercially available poly(alkylene) copolymers are the reaction product of ethene with a second alkene selected from butene, hexene, or octene. EXACT 3024 and EXACT 4011 are ethylene-butene copolymers. EXACT 3040 and EXACT 4151 are ethylene-hexene copolymers. EXACT 8210, EXACT 5181, ENGAGE 8003, and INFUSE D9530.05 are ethylene-octene copolymers.

The poly(alkylene) copolymers can be blended with other polymeric materials as long as the resulting backing layer is optically clear. Suitable blended polymeric materials (i.e., polymeric materials blending with the poly(alkylene) copolymers) are often ethylene copolymers such as, for example, ethylene vinyl acetate and ethylene methyl acrylate. The blended polymeric materials are typically selected to be miscible with the poly(alkylene) copolymers, to be optically clear, to be free or substantially free of additives that can contribute to the haze or that lower the luminous transmittance, and to be suitable for use in the processes described above for formation of the backing layer. As used herein, "substantially free" with reference to the additives in the blended polymeric materials means that these additives are present in an amount no greater than 0.5 weight percent, no greater than 0.4 weight percent, no greater than 0.3 weight percent, no greater than 0.2 weight percent, or no greater than 0.1 weight percent. The backing layer can contain, for example, up to 50 weight percent, up to 40 weight percent, up to 30 weight percent, up to 20 weight percent, or up to 10 weight percent of the blended polymeric materials.

In addition to choosing suitable materials that will result in backing layers with low haze and high luminous transmittance, the method of preparing the backing layer if often selected to maintain these values. That is, the method of making the backing layer is typically selected to provide a relatively smooth surface and a relatively uniform thickness. If the surface is roughened, the percent haze may become undesirably large. If the thickness is not relatively uniform, the luminous transmittance may be undesirably non-uniform. To provide suitable optical clarity, a process can be used to provide a thickness that is relatively uniform across the backing layer in any direction. For example, thickness often varies by less than 10 percent, less than 8 percent, less than 6 percent, or less than 5 percent across the backing layer in any direction. More specifically, a backing layer having an average thickness of 4 mils (0.1 millimeter or 100 micrometers) has a thickness variation of less than 10 micrometers, less than 8 micrometers, less than 6 micrometers, or less than 5 micrometers across the backing layer in any direction.

Many conventional methods used to form films of poly(alkylene) copolymers are not suitable because the resulting films do not have the requisite smoothness. For example, blowing methods are usually not suitable because anti-blocking agents or slip agents are typically added. The addition of these agents often tends to roughen the surface of the resulting film. Cast extrusion methods that impart a rough surface to the film in an attempt to minimize contact with a chill roller are typically not suitable.

Various methods can be used to prepare backing layers with suitable smoothness and thickness uniformity. In a first example, the poly(alkylene) copolymers can be cast between two smooth support layers such as release liners or between a smooth support layer and a smooth roller. No blocking agent or slip agent is needed and the absence of these agents is preferable. The support layers (e.g., release liners) tend to reinforce the resulting rubbery backing layer and allow the backing layer to be subjected to further processing without distortion or stretching. Further, the support layers tend to protect the surface until it is combined with the at least one pressure-sensitive adhesive layer.

More specifically, the poly(alkylene) copolymer can be extruded as a molten film using, for example, a flat cast extrusion die. The extrusion temperature can be in the range of about 150 °C to 200 °C. The extruded film of poly(alkylene) copolymer can be extruded between two support films. The resulting construction of support film /poly(alkylene) copolymer film / support film can then be passed through a chilled roll stack to cool and solidify the poly(alkylene) copolymer film. Backing films that are prepared using this method tend to have a relatively uniform thickness and to be relatively smooth.

Any suitable support surface can be used for forming the backing layer. In many embodiments, the support is a release liner. Any suitable release liner can be used. Suitable release liners are typically paper (e.g., Kraft paper) or polymeric films. In many applications, polymeric films are preferred. Polymeric films used as release liners can be formed, for example, from polyester such as polyethylene terephthalate or polyolefins such as polyethylene, polypropylene, or combinations thereof. The surface of the release liners can be optionally treated with a release agent such as a silicone, a fluorochemical such as a fluorosilicone, or other low surface energy materials such as a polyolefin (e.g., polyethylene, polypropylene, or low density polyethylene). An exemplary fluorosilicone is commercially available from Dow Coming under the trade designation SYL-OFF (e.g., SYL-OFF Q2-7785 or SYL-OFF Q2-7786). Other release liners include, for example, are commercially available under the trade designation CLEARSIL (e.g., CLEARSIL T10 or T50) from CP Films (St. Louis, MO) and under the trade designation LOPAREX (e.g., LOPAREX 5100) from Loparex (Willowbrook, IL). Suitable release liners and methods for treating liners are further described in, for example, U.S. Patent Nos.: 4,472,480 (Olson), 4,980,443 (Kendziorski), and 4,736,048 (Brown et al.), 5,578,381 (Hamada et al.), and 5,082,706 (Tangney); and U.S. Patent Application Publication 2008/0280086 (Sheridan et al.).

The thickness of the backing layer is often selected based on the desired stretch release force. A greater stretch release force is usually needed as the thickness of the backing layer is increased. Conversely, a lower stretch release force is needed as the thickness of the backing layer is decreased. The thickness of the backing layer can be, for example, up to 40 mils (1.0 millimeter or 1000 micrometers). As used herein, the term "mil" refers to 0.001 inch and 1 mil is equal to about 0.0025 centimeters or about 0.025 millimeters or about 25 micrometers. In many embodiments, the thickness is up to 30 mils (750 micrometers), up to 20 mils (500 micrometers), up to 10 mils (250 micrometers), up to 8 mils (200 micrometers), up to 6 mils (150 micrometers), or up to 5 mils (125 micrometers). The thickness is often at least 1 mil (0.025 millimeters or 25 micrometers), at least 2 mils (50 micrometers), at least 3 mils (75 micrometers), or at least 4 mils (100 micrometers). Some suitable backing layers have a thickness in the range of 1 mil (25 micrometers) to 20 mils (500 micrometers), in the range of 1 mil (25 micrometers) to 10 mils (250 micrometers), in the range of 1 mil (25 micrometers) to 8 mils (200 micrometers), in the range of 1 mil (25 micrometers) to 7 mils (175 micrometers), in the range of 2 mils (50 micrometers) to 8 mils (200 micrometers), in the range of 3 mils (75 micrometers) to 6 mils (150 micrometers), or in the range of 4 mils (100 micrometers) to 5 mils (125 micrometers).

As prepared, the backing layer is usually a rubbery material with a relatively smooth surface and with a relatively uniform thickness. In many embodiments, the backing layer is slightly tacky. A pressure-sensitive adhesive layer can be positioned adjacent to at least one major surface of the backing layer. In many embodiments, a first pressure-sensitive adhesive layer is positioned adjacent to a first major surface of the backing layer and a second pressure-sensitive adhesive layer is positioned adjacent to a second major surface of the backing layer. The second major surface of the backing layer is the surface opposite the first major surface. As used herein, the term "adjacent" with reference to the pressure-sensitive adhesive layer and the backing layer means that the pressure-sensitive adhesive layer contacts the backing layer or is separated from the backing layer by one or more intervening layers. That is, each pressure-sensitive adhesive layer is adhered directly or indirectly to the backing layer.

The backing layer can be subjected to a priming treatment prior to being positioned adjacent to the at least one pressure-sensitive adhesive layer. The primer treatment tends to increase adhesion between the backing layer and the pressure-sensitive adhesive layer. This increased adhesion is often desirable for a stretch releasing adhesive tape. That is, it is usually desirable that the adhesion of the pressure-sensitive adhesive layer to the backing layer is stronger than the adhesion of the pressure-sensitive adhesive layer to the substrate. Any suitable priming treatment known in the art can be used. For example, the priming treatment can include treatment with a chemical primer composition, treatment with a corona discharge or plasma discharge, exposure to an electron beam or ultraviolet light, etching with an acidic composition, or combinations thereof.

In some embodiments, the primer treatment includes applying a primer composition to a surface of the backing layer. Any suitable primer composition can be used. The primer composition can include, for example, a reactive chemical adhesive promoter (e.g., the components can react with the backing layer, the adhesive layer, or both). Exemplary primer compositions include those described in U.S. Patent No. 5,677,376 (Groves), incorporated herein by reference in its entirety. That is, the primer composition can include a blend of (1) a block copolymer such as styrene-ethylene/butylene-styrene block copolymer that is modified with maleic acid or maleic anhydride and (2) the polymeric reaction product of monovalent monomer mixture that includes (a) at least one alkyl (meth)acrylate ester of a non-tertiary alcohol having 1 to 14 carbon atoms and (b) at least one nitrogen-containing monomer. The block copolymer can be, for example, those commercially available from Shell Chemical Co. under the trade designation KRATON FG-1901X. Other suitable primer compositions include those commercially available under the trade designation NEOREZ (NEOREZ R551) from DSM NeoResins (Wilmington, MA). This primer composition contains waterborne polyurethane.

At least one pressure-sensitive adhesive layer is adhered directly or indirectly to a major surface of the backing layer. In many embodiments of the adhesive tape, there are two pressure-sensitive adhesive layers positioned on opposite major surfaces of the backing layer. As used in the art, the term "pressure-sensitive adhesive" refers to adhesive compositions that have (1) aggressive and persistent tack, (2) adherence with no more than finger pressure, (3) sufficient ability to hold onto an adherend, and (4) sufficient cohesive strength to be cleanly removable from the adherend.

The compositions included in the pressure-sensitive adhesive layers are typically formulated to provide the requisite viscoelastic properties to achieve the desired balance of tack, peel adhesion, and shear holding power. More specifically, the composition of each of the pressure-sensitive adhesive layers is typically chosen so that the Young's modulus is less than that of the backing layer. If the Young's modulus of each adhesive layer is less than that of the backing layer, the adhesive layer will yield during the deformation of the backing layer during stretch release and the backing layer is less likely to tear.

Additionally, the composition of each of the adhesive layers is often chosen so that the percent elongation at break is greater than that of the backing layer. If this condition is met, the adhesive layer is less likely to leave residue on the substrates upon being released from the substrates. That is, like the backing layer, the adhesive tape is stretchable at least 50 percent in a first direction without breaking when the tab is pulled. In some embodiments, the adhesive tape with ether one or two pressure-sensitive adhesive layers can be stretched at least 100 percent, at least 150 percent, at least 200 percent, at least 300 percent, at least 400 percent, or at least 500 percent without breaking. The adhesive tape can often be stretched up to 1200 percent, up to 1000 percent, up to 800 percent, up to 750 percent, or up to 700 percent without breaking. These relatively large elongation values facilitate stretch releasing of the adhesive tape after being adhered to a substrate.

Each pressure-sensitive adhesive layer includes a polyisobutylene material. The polyisobutylene material can be a homopolymer, copolymer, or a mixture thereof. The polyisobutylene material can include polymeric material having a single molecular weight range or can include a blend of several polymeric materials with each having a different molecular weight range. The desired adhesive properties can be achieved using various formulations.

Some adhesive compositions contain (a) the polyisobutylene material and (b) 0 to less than 10 weight percent tackifying resin. The amount of the tackifying resin is based on a total weight of solids in the adhesive composition (i.e., total solids content of the adhesive composition). These adhesive compositions can contain less than 8 weight percent, less than 6 weight percent, less than 4 weight percent, less than 2 weight percent, less than 1 weight percent, or less than 0.5 weight percent tackifying resin. Often, these exemplary adhesive compositions are free or substantially free of a tackifying resin. As used herein with reference to the tackifying resin, the term "substantially free" means that no tackifying resin is purposely added to the adhesive composition and any tackifying resin, if present, is a contaminant in another component of the adhesive composition. Substantially free often means that the tackifying resin is present in an amount less than 2 weight percent, less than 1 weight percent, less than 0.5 weight percent, less than 0.2 weight percent, or less than 0.1 weight percent based on the total solids content of the adhesive composition.

Adhesive compositions with low levels of tackifying resins or adhesive compositions that are free or substantially free of the tackifying resin may be advantageous for some applications. For example, the tackifier resins tend to have a relatively low molecular weight compared to many of the polyisobutylene materials included in the adhesive compositions. The presence of these relatively low molecular materials can, under some conditions, increase the amount of outgassing when positioned next to certain rigid substrates such as those prepared from polycarbonates or poly(meth)acrylates. Outgassing can result in defects such as bubbles or can result in delamination of the substrate from the adhesive layer. Outgassing is often undesirable and can be deleterious for optical applications. Adhesive compositions with low levels of tackifier or adhesive compositions that are free or substantially free of tackifying resins can often be positioned next to outgassing substrates such as polycarbonates and poly(meth)acrylates without bubble formation.

A first, second, and third exemplary adhesive composition with 0 to less than 10 weight percent tackifying agent are described in more detail below. In these adhesive compositions, the molecular weight of the polyisobutylene material is selected to provide the requisite tackiness for the adhesive layer. That is, the molecular weight of the polyisobutylene material is selected to provide a pressure-sensitive adhesive layer for an adhesive composition that is free, that is substantially free, or that contains less than 10 weight percent tackifying resin. In some applications, it may be preferable to avoid the use of a tackifying resin that might change color over time or that may be incompatible with the polyisobutylene. Incompatibility between the tackifying resin and the polyisobutylene material can negatively impact the optical clarity of the adhesive layer.

These adhesive compositions with 0 to 10 weight percent tackifying resin often contain 90 weight percent or more of the polyisobutylene material. The weight percent polyisobutylene material is based on a total solids content of the adhesive composition. These exemplary adhesive compositions can contain at least 92 weight percent, at least 94 weight percent, at least 95 weight percent, at least 96 weight percent, at least 98 weight percent, or at least 99 weight percent polyisobutylene material.

The first exemplary adhesive composition contains (a) a polyisobutylene material and (b) a tackifying resin in an amount in the range of 0 to 10 weight percent based on the total solids content of the adhesive composition. The polyisobutylene material includes a first polyisobutylene having a weight average molecular weight in the range of 75,000 to 4,200,000 gram/mole. The polyisobutylene material included in the first exemplary adhesive composition often contains at least 90 weight percent of the first polyisobutylene having a weight average molecular weight in the range of 75,000 to 4,200,000 grams/mole. For example, the polyisobutylene material includes at least 92 weight percent, at least 94 weight percent, at least 96 weight percent, at least 98 weight percent, at least 99 weight percent, or at least 99.5 weight percent of the first polyisobutylene.

The weight average molecular weight of the first polyisobutylene in the first adhesive composition can be in the range of 75,000 to 4,000,000 grams/mole. The particular weight average molecular weight chosen for the first polyisobutylene often includes a balancing of the adhesive strength and the cohesive strength. If the adhesive strength is not sufficient for a particular application, the weight average molecular weight of the first polyisobutylene can be decreased. If the weight average molecular weight is less than 75,000 gram/mole, however, the resulting adhesive composition may be too soft and sticky. The cohesive strength often tends to decrease as the molecular weight of the first polyisobutylene is decreased. If the cohesive strength is too low, residue can remain on the substrate when the adhesive tape is stretched for release purposes. The cohesive strength can be increased by increasing the molecular weight of the first polyisobutylene. If the weight average molecular weight is greater than 4,200,000, however, the composition may not function as an adhesive. The weight average molecular weight is often in the range of 80,000 to 3,000,000 grams/mole, in the range of 80,000 to 1,500,000 grams/mole, in the range of 80,000 to 800,000 grams/mole, in the range of 100,000 to 500,000 grams/mole, in the range of 100,000 to 400,000 grams/mole, or in the range of 100,000 to 300,000 grams/mole.

The second exemplary adhesive composition contains (a) a polyisobutylene material and (b) a tackifying resin in an amount of 0 to 10 weight percent based on a total solids content of the adhesive composition. The polyisobutylene material in the second exemplary adhesive composition includes (i) a first polyisobutylene having a weight average molecular weight in the range of 200,000 grams/mole to 4,200,000 gram/mole plus (ii) a second polyisobutylene having a weight average molecular weight in the range of 1,000 to 80,000 grams/mole. The weight average molecular weight of the first polyisobutylene can be, for example, in the range of 200,000 to 4,000,000 grams/mole, in the range of 200,000 to 3,000,000 grams/mole, in the range of 200,000 to 1,500,000 grams/mole, in the range of 200,000 to 800,000 grams/mole, in the range of 400,000 to 1,000,000 grams/mole, or in the range of 500,000 to 1,000,000 grams/mole. The weight average molecular weight of the second polyisobutylene can be, for example, in the range of 1,000 to 70,000 gram/mole, in the range of 1,000 to 50,000 grams/mole, in the range of 1,000 to 40,000 grams/mole, in the range of 1,000 to 20,000 gram/mole, in the range of 1,000 to 10,000 grams/mole, in the range of 2,000 to 60,000 grams/mole, in the range of 2,000 to 50,000 grams/mole, in the range of 5,000 to 50,000 grams/mole, or in the range of 10,000 to 50,000 grams/mole.

In these second exemplary adhesive compositions, the polyisobutylene material usually includes (i) 50 to 90 weight percent of the first polyisobutylene with the weight average molecular weight in the range of 200,000 grams/mole to 4,200,000 gram/mole and (ii) 10 to 50 weight percent of the second polyisobutylene with the weight average molecular weight in the range of 1,000 to 75,000 grams/mole. The weight percents of the first polyisobutylene and second polyisobutylene are based on a total weight of the polyisobutylene material in the adhesive composition. For example, the polyisobutylene material can include 50 to 80 weight percent of the first polyisobutylene and 20 to 50 weight percent of the second polyisobutylene, 50 to 70 weight percent of the first polyisobutylene and 30 to 50 weight percent of the second polyisobutylene, 50 to 60 weight percent of the first polyisobutylene and 40 to 50 weight percent of the second polyisobutylene, 60 to 90 weight percent of the first polyisobutylene and 10 to 40 weight percent of the second polyisobutylene, 70 to 90 weight percent of the first polyisobutylene and 10 to 30 weight percent of the second polyisobutylene, or 80 to 90 weight percent of the first polyisobutylene and 10 to 20 weight percent of the second polyisobutylene.

For the second exemplary adhesive compositions containing at least two different molecular weight ranges of polyisobutylene material, the adhesive strength tends to increase as the amount of the second polyisobutylene (i.e., the polyisobutylene with a weight average molecular weight in the range of 1,000 to 75,000 grams/mole) is increased. This lower molecular weight polyisobutylene tends to function like a tackifying resin in these adhesive compositions. If too much of this material is added, however, the adhesive composition may be more likely to leave a residue upon removal of the adhesive tape by stretching. Additionally, if too much of the lower molecular weight polyisobutylene material is added, the cohesive strength of the adhesive layer may be undesirably low.

The third exemplary adhesive composition contains (a) a polyisobutylene material and (b) a tackifying resin in an amount of 0 to 10 weight percent based on the total solids content of the adhesive composition. The polyisobutylene material includes (i) a first polyisobutylene having a weight average molecular weight in the range of 300,000 to 4,200,000 grams/mole, (ii) a second polyisobutylene having a weight average molecular weight in the range of greater than 50,000 to 250,000 g/mole, and (iii) a third polyisobutylene having a weight average molecular weight in the range of 1,000 to 50,000 grams/mole. The weight average molecular weight of the first polyisobutylene can be, for example, in the range of 300,000 to 4,000,000 grams/mole, in the range of 300,000 to 3,000,000 grams/mole, in the range of 300,000 to 1,500,000 grams/mole, in the range of 300,000 to 800,000 grams/mole, in the range of 400,000 to 1,000,000 grams/mole, or in the range of 500,000 to 1,000,000 grams/mole. The weight average molecular weight of the second polyisobutylene can be, for example, in the range of 55,000 to 250,000 gram/mole, in the range of 60,000 to 200,000 grams/mole, in the range of 60,000 to 150,000 grams/mole, or in the range of 60,000 to 100,000 grams/mole. The weight average molecular weight of the third polyisobutylene can be, for example, in the range of 1,000 to 40,000 grams/mole, in the range of 1,000 to 30,000 grams/mole, in the range of 1,000 to 20,000 grams/mole, in the range of 1,000 to 10,000 grams/mole, in the range of 1,000 to 5,000 grams/mole, in the range of 5,000 to 50,000 grams/mole, in the range of 10,000 to 40,000 grams/mole, or in the range of 20,000 to 40,000 grams/mole.

In these exemplary third adhesive compositions, the polyisobutylene material usually includes (i) 10 to 40 weight percent of the first polyisobutylene having a weight average molecular weight in a range of 300,000 to 4,200,000 grams/mole, (ii) 50 to 70 weight percent of a second polyisobutylene having a weight average molecular weight in the range of greater than 50,000 to 250,000 gram/mole, and (iii) 10 to 20 weight percent of a third polyisobutylene having a weight average molecular weight in the range of 1,000 to 50,000 grams/mole. The weight percents of the first polyisobutylene, second polyisobutylene, and third polyisobutylene are based on a total weight of the polyisobutylene material. For example, the polyisobutylene material can include (i) 10 to 30 weight percent, 10 to 20 weight percent, or 20 to 40 weight percent of the first polyisobutylene, (ii) 50 to 70 weight of the second polyisobutylene, and (iii) 10 to 20 weight percent of the third polyisobutylene. In other examples, the polyisobutylene material can include (i) 10 to 40 weight percent of the first polyisobutylene, (ii) 50 to 60 weight percent, 60 to 70 weight percent, or 55 to 65 weight percent of the second polyisobutylene, and (iii) 10 to 20 weight percent of the third polyisobutylene. In still other examples, the polyisobutylene material can include (i) 10 to 40 weight percent of the first polyisobutylene, (ii) 50 to 70 weight percent of the second polyisobutylene, and (iii) 10 to 15 weight percent or 15 to 20 weight percent of the third polyisobutylene.

For the third adhesive compositions, the amount of the first polyisobutylene is often increased to increase the cohesive strength and the amount of the third polyisobutylene is often increased to increase the adhesive strength. The amount of the second polyisobutylene is selected to balance the first and third polyisobutylene to provide an adhesive with suitable cohesive strength and adhesive strength.

Other adhesive compositions contain (a) a polyisobutylene material and (b) at least 10 weight percent tackifying resin based on a total solids content of the adhesive composition. These adhesive compositions often include at least 15 weight percent, at least 20 weight percent, or at least 25 weight percent tackifying resin based on the total solids content of the adhesive composition. The content of polyisobutylene material is often less than 85 weight percent, less than 80 weight percent, less than 75 weight percent, or less than 70 weight percent based on the total solids content of the adhesive composition. These adhesive compositions can be formulated with one or more weight average molecular weight ranges of the polyisobutylene material as illustrated by the fourth exemplary adhesive composition and the fifth exemplary adhesive composition. The addition of the tackifying resin often facilitates balancing of the various desired adhesive or physical characteristics of the adhesive composition. Further, the cost of the PSA layer is often less when a tackifying resin is included in the adhesive composition.

The fourth exemplary adhesive composition includes (a) a polyisobutylene material in an amount in the range of 40 to 90 weight percent based on a total solids contend of the adhesive composition and (b) a tackifying resin in an amount in the range of 10 to 60 weight percent based on the total solids content of the adhesive composition. The polyisobutylene material includes a first polyisobutylene having a weight average molecular weight in the range of 85,000 to 4,200,000 grams/mole. For example, the weight average molecular weight of the first polyisobutylene can be in the range of 100,000 to 4,200,000 grams/mole, in the range of 200,000 to 4,000,000 grams/mole, in the range of 400,000 to 4,000,000 grams/mole, in the range of 500,000 to 4,000,000 grams/mole, in the range of 1,000,000 to 4,000,000 grams/mole, in the range of 100,000 to 3,000,000 grams/mole, in the range of 100,000 to 2,000,000 grams/mole, in the range of 100,000 to 1,000,000 grams/mole, in the range of 100,000 to 500,000 grams/mole, in the range of 85,000 to 500,000 grams/mole, in the range of 100,000 to 400,000 grams/mole, in the range of 100,000 to 300,000 grams/mole, or in the range of 85,000 to 300,000 grams/mole.

The polyisobutylene material included in the fourth exemplary adhesive composition often contains at least 90 weight percent of the first polyisobutylene having a weight average molecular weight in the range of 85,000 to 4,200,000 grams/mole. For example, the polyisobutylene material includes at least 92 weight percent, at least 94 weight percent, at least 96 weight percent, at least 98 weight percent, at least 99 weight percent, or at least 99.5 weight percent of the first polyisobutylene.

These exemplary fourth adhesive compositions can include 40 to 80 weight percent polyisobutylene material and 20 to 60 weight percent tackifying resin, 40 to 70 weight percent polyisobutylene material and 30 to 60 weight percent tackifying resin, 40 to 60 weight percent polyisobutylene material and 40 to 60 weight percent tackifying resin, 50 to 90 weight percent polyisobutylene material and 10 to 50 weight percent tackifying resin, 60 to 90 weight percent polyisobutylene material and 10 to 40 weight percent tackifying resin, or 70 to 90 weight percent polyisobutylene material and 10 to 30 weight percent tackifying resin. The weight percent polyisobutylene material and the weight percent tackifying resin are based on the weight of solids in the adhesive composition.

Some more specific exemplary fourth adhesive compositions contain 60 to 90 weight percent polyisobutylene material and 10 to 40 weight percent tackifying resin or 70 to 90 weight percent polyisobutylene material and 10 to 30 weight percent tackifying agent. The polyisobutylene material contains at least 90 weight percent, at least 95 weight percent, at least 98 weight percent, or at least 99 weight percent of a first polyisobutylene having a weight average molecular weight in the range of 85,000 to 500,000 grams/mole, in the range of 85,000 to 300,000 grams/mole, or in the range of 100,000 to 3000,000 grams/mole.

For the fourth exemplary adhesive compositions containing one molecular weight range of polyisobutylene material plus tackifying resin, the adhesive strength tends to increase with an increase in the amount of the tackifier. However, as the amount of tackifier is increased, the cohesive strength tends to decrease and more residue tends to be left on a substrate when the adhesive tape is stretched for removal purposes.

The fifth exemplary adhesive composition includes (a) a polyisobutylene material in an amount in the range of 70 to 90 weight percent based on a total solids content of the adhesive composition and (b) 10 to 30 weight percent tackifying resin based on the total solids content of the adhesive composition. The polyisobutylene material includes (i) a first polyisobutylene having a weight average molecular weight in the range of 100,000 to 4,200,000 grams/mole and (ii) a second polyisobutylene having a weight average molecular weight in the range of 30,000 to 75,000 grams/mole. Typically, the polyisobutylene material includes (i) 10 to 30 weight percent of the first polyisobutylene and (ii) 70 to 90 weight percent of the second polyisobutylene based on the weight of the polyisobutylene material.

The first polyisobutylene in the fifth exemplary adhesive compositions can have a weight average molecular weight in the range of 100,000 to 4,000,000 grams/mole, in the range of 100,000 to 3,000,000 grams/mole, in the range of 100,000 to 2,000,000 grams/mole, in the range of 100,000 to 1,000,000 grams/mole, in the range of 100,000 to 500,000 grams/mole, in the range of 100,000 to 400,000 grams/mole, or in the range of 100,000 to 300,000 grams/mole. The second polyisobutylene can have a weight average molecular weight in the range of 40,000 to 70,000 grams/mole, in the range of 50,000 to 70,000 grams/mole, in the range of 50,000 to 60,000 grams/mole, in the range of 55,000 to 75,000 grams/mole, in the range of 60,000 to 75,000 grams/mole, or in the range of 65,000 to 75,000 grams/mole.

The polyisobutylene material in the fifth exemplary adhesive compositions often contains 10 to 25 weight percent first polyisobutylene and 75 to 90 weight percent second polyisobutylene, 10 to 20 weight percent first polyisobutylene and 80 to 90 weight percent second polyisobutylene, 15 to 30 weight percent first polyisobutylene and 70 to 85 weight percent second polyisobutylene, or 20 to 30 weight percent first polyisobutylene and 70 to 80 weight percent second polyisobutylene. These weight percents for the first polyisobutylene and for the second polyisobutylene are based on the total weight of the polyisobutylene material.

This fifth exemplary adhesive composition often contains 70 to 85 weight percent polyisobutylene material and 15 to 30 weight percent tackifying resin, 70 to 80 weight percent polyisobutylene material and 20 to 30 weight percent tackifying resin, 75 to 90 weight percent polyisobutylene material and 10 to 25 weight percent tackifying resin, or 80 to 90 weight percent polyisobutylene material and 10 to 20 weight percent tackifying resin.

Overall, the fifth exemplary adhesive composition can contain (a) a first polyisobutylene in an amount in the range of 10 to 20 weight percent, (b) a second polyisobutylene in an amount in the range of 50 to 80 weight percent, and (c) a tackifying resin in an amount in the range of 10 to 30 weight percent based on the total solids content of the adhesive composition. For example, the adhesive composition can contain (a) 10 to 15 weight percent or 15 to 20 weight percent first polyisobutylene, (b) 50 to 80 weight percent second polyisobutylene, and (c) 10 to 30 weight percent tackifying resin. Other examples can contain (a) 10 to 20 weight percent first polyisobutylene, (b) 50 to 75 weight percent, 50 to 70 weight percent, 50 to 60 weight percent, 60 to 80 weight percent, or 70 to 80 weight percent second polyisobutylene, and (c) 10 to 30 weight percent tackifying resin. Still other examples can contain (a) 10 to 20 weight percent polyisobutylene, (b) 50 to 80 weight percent second polyisobutylene, and (c) 10 to 25 weight percent, 10 to 20 weight percent, 15 to 30 weight percent, or 20 to 30 weight percent tackifying resin.

Compared to the fourth exemplary adhesive compositions with comparable adhesive strength and cohesive strength, the fifth exemplary adhesive compositions often contain a smaller amount of the tackifier resin.

The polyisobutylene material included in any of the adhesive compositions can be a homopolymer, copolymer, or a mixture thereof. Copolymers can be random or block copolymers. Block copolymers can include the polyisobutylene sections in the main backbone, in a side chain, or in both the main backbone and a side chain of the polymeric material. The polyisobutylene material is typically prepared by polymerizing isobutylene alone or by polymerizing isobutylene plus additional ethylenically unsaturated monomers in the presence of a Lewis catalyst such as aluminum chloride or boron trifluoride.

Polyisobutylene materials are commercially available from several manufacturers. Homopolymers are commercially available, for example, under the trade designation OPPANOL (e.g., OPPANOL B 15, B30, B50, B100, B 150, and B200) from BASF Corp. (Florham Park, NJ). These polymers often have a weight average molecular weight in the range of about 40,000 to 4,000,000 grams/mole. Still other exemplary homopolymers are commercially available from United Chemical Products (UCP) of St. Petersburg, Russia in a wide range of molecular weights. For example, homopolymers commercially available from UCP under the trade designation SDG have a viscosity average molecular weight in the range of about 35,000 to 65,000 grams/mole. Homopolymers commercially available from UCP under the trade designation EFROLEN have a viscostiy average molecular weight in the range of about 480,000 to about 4,000,000 grams/mole. Homopolymers commercially available from UCP under the trade designation JHY have a viscosity average molecular weight in the range of about 3000 to about 55,000 grams/mole. These homopolymers typically do not have reactive double bonds.

Other suitable polyisobutylene homopolymers are commercially available under the trade designation GLISSOPAL (e.g., GLISSOPAL 1000, 1300, and 2300) from BASF Corp. (Florham Park, NJ). These polyisobutylene materials usually have terminal double bonds and are considered to be reactive polyisobutylene materials. These polymers often have a number average molecular weight in the range of about 500 to about 2,300 grams/mole. The ratio of the weight average molecular weight to the number average molecular weight is typically in the range of about 1.6 to 2.0.

Polyisobutylene copolymers are often prepared by polymerizing isobutylene in the presence of a small amount of another monomer such as, for example, styrene, isoprene, butene, or butadiene. These copolymers are typically prepared from a monomer mixture that includes at least 70 weight percent, at least 75 weight percent, at least 80 weight percent, at least 85 weight percent, at least 90 weight percent, or at least 95 weight percent isobutylene based on the weight of monomers in the monomer mixture. Suitable isobutylene/isoprene copolymers are commercially available under the trade designation EXXON BUTYL (e.g., EXXON BUTYL 065, 068, and 268) from Exxon Mobil Corp. These materials have unsaturation in the range of about 1.05 to about 2.30 mole percent. Other exemplary isobutylene/isoprene copolymers are commercially available from United Chemical Products (St. Petersburg, Russia) such as BK-1675N with an unsaturation of about 1.7 mole percent. Still other exemplary isobutylene/isoprene copolymers are commercially available from LANXESS (Sarnia, Ontario, Canada) such as LANXESS BUTYL 301 with an unsaturation of about 1.85 mole percent, LANXESS BUTYL 101-3 with an unsaturation of about 1.75 mole percent, and LANXESS BUTYL 402 with an unsaturation of about 2.25 weight percent. Suitable isobutylene/styrene block copolymers are commercially available under the trade designation SIBSTAR from Kaneka (Osaka, Japan). These materials are available as both diblocks and triblocks with the styrene content varying from about 15 to 30 weight percent based on the weight of the copolymer.

Some of the adhesive compositions include a tackifying resin. Suitable tackifying resins are those that exhibit good compatibility (i.e., miscibility) with the polyisobutylene material. That is, suitable tackifying resins are those that can be combined with the polyisobutylene material to prepare an adhesive layer that is visibly transparent or optically clear. In most adhesive compositions that contain a tackifying resin, the tackifying resin is a hydrocarbon-based material. The tackifying resins are typically amorphous and have a weight average molecular weight no greater than 5000 grams/mole. If the weight average molecular weight is greater than about 5000 grams/mole, compatibility with the polyisobutylene material may decrease, tackiness may decrease, or both. The molecular weight is often no greater than 4000 grams/mole, no greater than about 2500 grams/mole, no greater than 2000 grams/mole, no greater than 1500 grams/mole, no greater than 1000 grams/mole, or no greater than 500 grams/mole. In some embodiments, the molecular weight is in the range of 200 to 5000 gram/mole, in the range of 200 to 4000 grams/mole, in the range of 200 to 2000 grams/mole, or in the range of 200 to 1000 gram/mole.

Some suitable tackifying resins are hydrogenated hydrocarbon resins. The hydrogenated hydrocarbon resins are often hydrogenated cycloaliphatic resins, hydrogenated aromatic resins, or combinations thereof. For example, some tackifying resins are hydrogenated C9-type petroleum resins obtained by copolymerizing a C9 fraction produced by thermal decomposition of petroleum naphtha, hydrogenated C5-type petroleum resins obtained by copolymerizing a C5 fraction produced by thermal decomposition of petroleum naphtha, or hydrogenated C5/C9-type petroleum resins obtained by polymerizing a combination of a C5 fraction and C9 fraction produced by thermal decomposition of petroleum naphtha. The C9 fraction can include, for example, indene, vinyl-toluene, alpha-methylstyrene, beta-methylstyrene, or a combination thereof. Other exemplary tackifying resins are. The C5 fraction can include, for example, pentane, isoprene, piperine, 1,3-pentadiene, or a combination thereof.

The tackifier can have any suitable softening temperature or softening point. If the softening temperature is greater than 200°C, the resin may not function as a tackifying resin. The softening temperature is often no less than 200°C, less than 180°C, less than 160°C, less than 150°C, less than 125°C, or less than 120°C. In applications that tend to generate heat, however, the tackifier is often selected to have a softening point is often at least 75°C. Such a softening point helps minimize separation of the tackifier from the rest of the adhesive composition when the adhesive composition is subjected to heat such as from an electronic device or component. The softening temperature is often selected to be at least 80°C, at least 85°C, at least 90°C, or at least 95°C. In applications that do not generate heat, however, the tackifier can have a softening point less than 75°C.

Some suitable tackifying resins are commercially available under the trade designation ARKON (e.g., ARKON P or ARKON M) from Arakawa Chemical Industries Co., Ltd. (Osaka, Japan). These materials are described in the trade literature as being water white, hydrogenated hydrocarbon resins. ARKON P types (e.g., P-70, P-90, P-100, P-115, and P-140) are fully hydrogenated while ARKON M types (e.g., M-90, M-100, M-115, and M-135) are partially hydrogenated. ARKON P-100 has a number average molecular weight of about 850 grams/mole, a softening point of about 100°C, and a glass transition temperature of about 45°C. ARKON P-140 has a number average molecular weight of about 1250 grams/mole, a softening point of about 140°C, and a glass transition temperature of about 90°C. ARKON M-90 has a number average molecular weight of about 730 grams/mole, a softening point of about 90°C, and a glass transition temperature of about 36°C. ARKON-M-100 has a number average molecular weight of about 810 grams/mole, a softening point of about 100°C, and a glass transition temperature of about 45°C.

Other suitable tackifying resins are commercially available under the trade designation ESCOREZ from Exxon Chemical. The ESCOREZ 5300 (e.g., ESCOREZ 5300, 5320, 5340, and 5380) series of resins are described in the trade literature as being water white, cycloaliphatic hydrocarbon resins. These materials have a weight average molecular weight in the range of about 370 grams/mole to about 460 grams/mole, a softening point in the range of about 85°C to about 140°C, and a glass transition temperature in the range of about 35°C to about 85°C. The ESCOREZ 5400 (e.g., ESCOREZ 5400 and 5415) series of resins are described in the trade literature as being very light colored cycloaliphatic hydrocarbon resins. These materials have a weight average molecular weight in the range of about 400 to about 430 grams/mole, a softening point in the range of about 103°C to 118°C, and a glass transition temperature in the range of about 50°C to 65°C. The ESCOREZ 5600 (e.g., ESCOREZ 5600, 5615, 5637, and 5690) series of resins are described in the trade literature as being very light colored, aromatic modified cycloaliphatic resin. The percent of aromatic hydrogen atoms is in the range of about 6 to 12 weight percent based on the weight of all the hydrogen atoms in the resins. These materials have a weight average molecular weight in the range of 480 grams/mole to 520 grams/mole, a softening point in the range of about 87°C to about 133°C, and a glass transition temperature in the range of about 40°C to 78°C. The ESCOREZ 1300 (e.g., 1315, 1310LC, and 1304) series resins are described in the trade literature as being aliphatic resins with a high softening point. ESCOREZ 1315 has a weight average molecular weight of about 2200 grams/mole, a softening point in the range of 112°C to 118°C, and a glass transition temperature about 60°C. ESCOREZ 1310LC has a light color, a weight average molecular weight of about 1350 grams/mole, a softening point of 95°C, and a glass transition temperature of about 45°C. ESCOREZ 1304 has a weight average molecular weight of about 1650 grams/mole, a softening point in the range of 97°C to 103°C, and a glass transition temperature of 50°C.

Still other suitable tackifying resins are commercially available under the trade designation REGALREZ (e.g., REGALREZ 1085, 1094, 1126, 1139, 3102, and 6108) from Eastman (Kingsport, TN). These resins are described in the trade literature as hydrogenated aromatic pure monomer hydrocarbon resins. They have a weight average molecular weight ranging from 850 grams/mole to 3100 grams/mole, a softening temperature in the range of 87°C to 141°C, and a glass transition temperature in the range of 34°C to 84°C. REGALEZ 1018 can be used in applications that do not generate heat. This tackifying resin has a weight average molecular weight of approximated 350 grams/mole, a softening point of 19°C, and a glass transition temperature of 22°C.

Yet other suitable tackifying resins are commercially available under the trade designation WINGTACK (e.g., WINGTACK 95 and RWT-7850) resins from Cray Valley (Exton, PA). The trade literature describes these tackifying resins as synthetic resins obtained by cationic polymerization of aliphatic C5 monomers. WINGTACK 95 is a light yellow solid with a weight average molecular weight of 1700 grams/mole, a softening point of 98°C, and a glass transition temperature of 55°C. WINGTACK RWT-7850 is a light yellow solid with a weight average molecular weight of 1700 grams/mole, a softening point of 102°C, and a glass transition temperature of 52°C.

Even further suitable tackifying resins are commercially available under the trade designation PICCOTAC (e.g., PICCOTAC 6095-E, 8090-E, 8095, 8595, 9095, and 9105 from Eastman (Kingsport, TN). The trade literature describes these resins as aromatic modified, aliphatic hydrocarbon resin or as aromatic modified C5 resins. PICCOTACK 6095-E has a weight average molecular weight of 1700 grams/mole and a softening point of 98°C. PICCOTACK 8090-E has a weight average molecular weight of 1900 grams/mole and a softening point of 92°C. PICCOTACK 8095 has a weight average molecular weight of 2200 grams/mole and a softening point of 95°C. PICCOTAC 8595 has a weight average molecular weight of 1700 grams/mole and a softening point of 95°C. PICCOTAC 9095 has a weight average molecular weight of 1900 grams/mole and a softening point of 94°C. PICCOTAC 9105 has a weight average molecular weight of 3200 grams/mole and a softening point of 105°C.

Some of the adhesive compositions are cured using a multifunctional monomer. The multifunctional monomers typically have multiple (meth)acryloyl groups (i.e., groups of formula H₂C=C(R¹)-(CO)- where R¹ is hydrogen or methyl). The multifunctional monomers can be a multifunctional (meth)acrylate, multifunctional (meth)acrylamide, or a compound that is both a (meth)acrylamide and (meth)acrylate. While not wishing to be bound by theory, the multifunctional monomers can react with any ethylenically unsaturated groups in the adhesive composition. For example, the multifunctional monomers can react with polyisobutylene material with terminal ethylenically unsaturated groups, with other multifunctional monomers, or with both. In many adhesive compositions, the multifunctional monomers are the only compounds present with ethylenically unsaturated groups. That is, in adhesive compositions that do not include polyisobutylene material with terminal ethylenically unsaturated groups, the multifunctional monomers react with other multifunctional monomers. Suitable multifunctional monomers are those that result in the formation of a crosslinked material that is compatible with the polyisobutylene material and the tackifying resin.

The multifunctional monomer is often a multifunctional (meth)acrylate. The multifunctional (meth)acrylate usually has two, three, or four (meth)acryloyl groups. The multifunctional monomer can be of any suitable molecular weight and can include, for example, polymeric or oligomeric materials. In some embodiments, the multifunctional (meth)acrylate can be of formula

H₂C=C(R¹)-(CO)-O-R²-O-(CO)-(R¹)C=CH₂

with two (meth)acryloyl groups. In this formula, R¹ is hydrogen or methyl and R² is an alkyene, arylene, heteroalkylene, or a combination thereof. Any alkylene or heteroalkylene included in R² can be linear, branched, cyclic, or a combination thereof. The heteroalkylene can include any suitable heteroatom but the heteroatom is often oxygen. In many embodiments, the multifunctional (meth)acrylate is an alkylene di(meth)acrylate with an alkylene group having at least 4 to 40 carbon atoms, 8 to 40 carbon atoms, 4 to 30 carbon atoms, 8 to 30 carbon atoms, 4 to 20 carbon atoms, 8 to 20 carbon atoms, 6 to 18 carbon atoms, 8 to 18 carbon atoms, 6 to 16 carbon atoms, 8 to 16 carbon atoms, 8 to 14 carbon atoms, or 8 to 12 carbon atoms. Exemplary alkylene di(meth)acrylates include, but are not limited to, tricylcodecane dimethanol di(meth)acrylate, 1,9-nonanediol di(meth)acrylate, 1,10-decanediol di(meth)acrylate, tricyclodecane dimethanol di(meth)acrylate, tricyclodecanediol di(meth)acrylate, cyclohexane dimethanol di(meth)acrylate, 1,6-hexanediol di(meth)acrylate, or hydrogenated polybutadiene di(meth)acrylate. Exemplary heteroalkylene di(meth)acrylates include, but are not limited to, polyethylene glycol di(meth)acrylate such as those commercially available from Sartomer (Exton, PA) under the trade designation SR210 (based on a polyethylene glycol with a weight average molecular weight of about 200 grams/mole), SR252 (based on a polyethylene glycol with a weight average molecular weight of about 400 grams/mole), and SR603 (based on a polyethylene glycol with a weight average molecular weight of about 600 grams/mole). Suitable multifunctional (meth)acrylates with three (meth)acryloyl groups include, but are not limited to, trimethylolpropane tri(meth)acrylate. Suitable oligomeric materials include, but are not limited to, urethane acrylate oligomers.

The multifunctional monomer typically present in an amount no greater than 30 weight percent based on the total solids content of the adhesive layer. If the amount of the (meth)acrylate material is greater than about 30 weight percent, the flexibility of the adhesive layer may be insufficient. The multifunctional monomer is often present in an amount no greater than 25 weight percent, no greater than 20 weight percent, no greater than 15 weight percent, no greater than 10 weight percent, no greater than 5 weight percent, no greater than 4 weight percent, no greater than 3 weight percent, or no greater than 2 weight percent based on the total solids content of the adhesive layer. More specifically, the multifunctional monomer can be present in an amount in the range of 0 to 30 weight percent, in the range of 0.1 to 20 weight percent, in the range of 0.1 to 10 weight percent, in the range of 0.2 to 6 weight percent, in the range of 0.1 to 4 weight percent, in the range of 0.1 to 2 weight percent, or in the range of 0 to 4 weight percent based on the total solids content of the adhesive layer.

The addition of the multifunctional monomer tends to result in an increase in the cohesive strength of the adhesive layer. The glass transition temperature of the adhesive composition tends to increase with curing. Further, the miscibility or compatibility of the polyisobutylene and tackifying resin can be improved by the addition of the multifunctional monomers.

When a multifunctional monomer is included in the adhesive composition, a means of reacting the various ethylenically unsaturated groups is typically added. In some embodiments, the curing reaction can occur in the presence of an electron beam or gamma rays. In other embodiments, an initiator can be added to react the various ethylenically unsaturated groups. The initiator can be a thermal initiator or a photoinitiator. Thermal initiators are often used at a concentration level of 0.01 1 to 5 weight percent, 0.01 to 2 weight percent, 0.01 to 1 weight percent, or 0.01 to 0.5 weight percent based on the total solids content of the adhesive composition. Photoinitiators are often used at a concentration level of 0.01 to 10 weight percent, 0.01 to 5 weight percent, 0.01 to 2 weight percent, 0.01 to 1 weight percent, or 0.01 to 0.5 weight percent based on the total solids content of the adhesive composition.

The thermal initiator is often a peroxide, hydroperoxides, or azo compound. Exemplary peroxides include, but are not limited to, benzoyl peroxide, dicumyl peroxide, p-diisoprpylbenzene dihydroperoxide, cyclohexane peroxide, 1,1-bis(tert-butylperoxy)cyclohexane, 1,1-di(tert-hexylperoxy)-3,3,5-tirmethylcyclohexane, 1,1-di(tert-butylperoxy)-3,3,5-tirmethylcyclohexane, 1,1-di(tert-amylperoxy)-3,3,5-tirmethylcyclohexane, lauryl peroxide, and dilauroyl peroxide. An exemplary hydroperoxide includes, but is not limited to, tert-butyl hydroperoxide. Exemplary azo compounds include, but are not limited to, 2,2'-azobis(2-methylbutane nitrile) that is commercially available under the trade designation VAZO 67 from DuPont (Wilmington, DE), 2,2'-azobis(isobutyronitrile) that is commercially available as VAZO 64 from DuPont, and 2,2'-azobis(2,4-dimethylpentane nitrile) that is commercially available as VAZO 52 from DuPont. The initiator is typically present in an amount in the range of 0.01 to 5 weight percent, in the range of 0.01 to 2 weight percent, in the range of 0.01 to 1 weight percent, or in the range of 0.01 to 0.5 weight percent based on a total weight of polymerizable material in the polymerizable composition.

If a thermal initiator is used, the adhesive composition is typically heated after forming a layer of the adhesive composition on the backing layer or other support surface. Any temperature suitable for curing the adhesive composition can be used. For example, the adhesive layer can be heated at temperatures up to 200°C, up to 175°C, up to 150°C, up to 125°C, up to 100°C, up to 90°C, or up to 80°C. The temperature can often be lowered if the time at temperature is increased.

Examples of photoinitiators suitable in the ultraviolet region include, but are not limited to, benzoin, benzoin alkyl ethers (e.g., benzoin methyl ether, benzoin isopropyl ether, and substituted benzoin alkyl ethers such anisoin methyl ether), phenones (e.g., substituted acetophenones such as 2,2-dimethoxy-2-phenylacetophenone, 2,2-diethoxyacetophenone, substituted alpha-ketols such as 2-methyl-2-hydroxypropiophenone), phosphine oxides, polymeric photoinitiators, and the like.

Commercially available photoinitiators include, but are not limited to, 2-hydroxy-2-methyl-1-phenyl-propane-1-one (e.g., commercially available under the trade designation DAROCUR 1173 from Ciba Specialty Chemicals), 2,4,6-trimethylbenzoyldiphenyl-phosphine oxide (e.g., commercially available under the trade designation DAROCUR TPO from Ciba Specialty Chemicals), a mixture of 2,4,6-trimethylbenzoyldiphenyl-phosphine oxide and 2-hydroxy-2-methyl-1-phenyl-propan-1-one (e.g., commercially available under the trade designation DAROCUR 4265 from Ciba Specialty Chemicals), 2,2-dimethoxy-1,2-diphenylethan-1-one (e.g., commercially available under the trade designation IRGACURE 651 from Ciba Specialty Chemicals), a mixture of bis(2,6-dimethoxybenzoyl)-2,4,4-trimethyl-pentylphosphine oxide and 1-hydroxycyclohexyl-phenyl-ketone (e.g., commercially available under the trade designation IRGACURE 1800 from Ciba Specialty Chemicals), a mixture of bis(2,6-dimethoxybenzoyl)-2,4,4-trimethyl-pentylphosphine oxide (e.g., commercially available under the trade designation IRGACURE 1700 from Ciba Specialty Chemicals), 2-methyl-1[4-(methylthio)phenyl]-2-morpholinopropan-1-one (e.g., commercially available under the trade designation IRGACURE 907 from Ciba Specialty Chemicals), 1-hydroxycyclohexyl-phenyl-ketone (e.g., commercially available under the trade designation IRGACURE 184 from Ciba Specialty Chemicals), 2-benzyl-2-(dimethylamino)-1-[4-(4-morpholinyl)phenyl]-1-butanone (e.g., commercially available under the trade designation IRGACURE 369 from Ciba Specialty Chemicals), bis(2,4,6-trimethylbenzoyl)-phenylphosphine oxide (e.g., commercially available under the trade designation IRGACURE 819 from Ciba Specialty Chemicals), ethyl 2,4,6-trimethylbenzoyldiphenyl phosphinate (e.g., commercially available from BASF, Charlotte, NC under the trade designation LUCIRIN TPO-L), and 2,4,6-trimethylbenzoyldiphenylphosphine oxide (e.g., commercially available from BASF, Charlotte, NC under the trade designation LUCIRIN TPO), and oligo[2-hydroxy-2-methyl-1-[4-(1-methylvinyl)phenyl]propaneone] commercially available under the trade designation ESACURE ONE from Lamberti S.P.A. Chemical Specialties (Italy).

If a photoinitiator is used, the adhesive composition is typically exposed to actinic radiation after forming a layer of the adhesive composition on the backing layer or other support surface. The photoinitiator often can be selected to be reactive at different wavelengths of actinic radiation. The actinic radiation often includes wavelengths of light in the ultraviolet region of the electromagnetic spectrum. Many of the photoinitators described above are suitable for use with ultraviolet light.

The adhesive compositions can include other optional additives such as softening agents. The softening agent can be used, for example, to adjust the viscosity, to improve the processability (for example, making the adhesive composition suitable for extrusion), to lower the glass transition temperature resulting in enhanced adhesion at lower temperatures, or to adjust the balance between cohesive strength and adhesive strength. The softening agent is often selected to have low volatility, to be transparent in the visible region of the electromagnetic spectrum, and to be free or substantially free of color and/or odor. If an optional softening agent is included in the adhesive composition, it is typically present in an amount no greater than 20 weight percent, no greater than 15 weight percent, no greater than 10 weight percent, or no greater than 5 weight percent.

Suitable softening agents for many adhesive compositions include, but are not limited to, a petroleum-based hydrocarbon such as an aromatic type (e.g., naphthalene type) or paraffin type; a liquid rubber or derivative thereof such liquid polybutylene resin, or hydrogenated liquid polyisoprene. Suitable polybutylene resins are commercially available under the trade designation INDOPOL from INEOS Oligomers (League City, TX) and under the trade designation PANALANE (e.g., PANALANE H300E) from LIPO Chemicals, Inc. (Paterson, NJ). In embodiments where softening agents are added, one softening agents or a combination of softening agents can be included in the adhesive composition.

Other optional additives can include, for example, ultraviolet absorbents (e.g., benzotriazole, oxazolic acid amide, benzophenone, or derivatives thereof), ultraviolet stabilizers (e.g., hindered amines or derivatives thereof, imidazole or derivatives thereof, phosphorous-based stabilizers, and sulfur ester-based stabilizers), antioxidants (e.g., hindered phenol compounds, phosphoric esters, or derivatives thereof). These optional additives and the amounts of these optional additives are typically chosen so that the additives do not impair other desirable characteristics of the adhesive compositions. Each type of optional additive is typically present in an amount no greater than 5 weight percent, no greater than 3 weight percent, no greater than 2 weight percent, no grater than 1 weight percent, no greater than 0.5 weight percent, no greater than 0.3 weight percent, no greater than 0.2 weight percent, or no greater than 0.1 weight percent based on the total weight of solids in the adhesive composition.

The adhesive compositions can further include a solvent. The solvents are preferably not reactive with the components of the adhesive composition. Suitable solvents are usually selected based on its ability to dissolve the polyisobutylene material, the tackifying resin, or both. The solvent can be, for example, aromatic solvents (e.g., benzene and toluene) or aliphatic solvents such as alkanes (e.g., heptane, hexane, cyclohexane), or combinations thereof. If present, the solvent can be used in any amount. The solvent is often added in an amount sufficient to lower the viscosity to provide an adhesive composition that can be applied as a coated layer to the surface of the backing layer or a support layer. Because the majority of the solvent is typically removed from the coated layer, an excess of solvent is typically avoided. The solvent is often present in the adhesive composition in an amount no greater than 40 weight percent, no greater than 30 weight percent, no greater than 25 weight percent, no greater than 20 weight percent, no greater than 15 weight percent, no greater than 10 weight percent based on the total weight of the adhesive composition.

Any suitable method can be used to prepare the pressure-sensitive adhesive layers from the adhesive compositions. For example, the adhesive composition can be coated onto a support layer such as a release liner, coated directly onto the backing layer, or co-extruded with the backing layer. In some embodiments the adhesive layer is disposed between two release liners and then laminated to the backing layer. Many of the same types of release liners described for use in the preparation of the backing layer can be used in the preparation of the adhesive layers.

If the adhesive layer is cured, the curing reaction often occurs after the adhesive layer has been formed. For example, the adhesive layer can be formed and then heated to drive off any solvent that may be present and to cure the polymeric material in the presence of a thermal initiator. That is, the solvent can often be driven off simultaneously with the curing reaction when a thermal imitator is used. If a peroxide compound is used as a thermal initiator, however, the solvent is typically removed at a first temperature and then the temperature is increased for curing. If a photoinitiator is used, no heating step is included unless solvent is present. In the absence of solvent removal, the adhesive layer can be formed and then exposed to actinic radiation. In some solvent is present, the adhesive layer can be formed, heated to remove at least most of the solvent, and then exposed to actinic radiation.

In some embodiments it may be desirable to impart a microstructured surface to one or both major surfaces of the adhesive layer. It may be desirable to have a microstructured surface on at least one surface of the adhesive to aid air egress during lamination. If it is desired to have a microstructured surface on one or both surfaces of the adhesive film, the adhesive coating or film may be placed on a tool or a liner containing microstructured features. The liner or tool can then be removed to expose an adhesive film having a microstructured surface. For optical applications, it is often desirable that the microstructures disappear over time to prevent interference with optical properties.

Any suitable thickness can be used for the pressure-sensitive adhesive layer or layers. In many embodiments, each pressure-sensitive adhesive layer has a thickness no greater than 20 mils (500 micrometers), no greater than 10 mils (250 micrometers), no greater than 5 mils (125 micrometers), no greater than 4 mils (100 micrometers), no greater than 3 mils (75 micrometers), or no greater than 2 mils (50 micrometers). The thickness of the pressure-sensitive adhesive layer is often at least 0.5 mils (12.5 micrometers) or at least 1 mil (25 micrometers). For example, the thickness of the pressure-sensitive adhesive layer can be in the range of 0.5 mils (2.5 micrometers) to 10 mils (250 micrometers), in the range of 0.5 mils (5 micrometers) to 10 mils (250 micrometers), in the range of 0.5 mils (12.5 micrometers) to 5 mils (125 micrometers), in the range of 1 mil (25 micrometers) to 5 mils (125 micrometers), in the range of 1 mil (25 micrometers) to 3 mils (75 micrometers), or in the range of 1 mil (25 micrometers) to 2 mils (50 micrometers).

In some embodiments, the adhesive tape has a single pressure-sensitive adhesive layer adhered directly or indirectly to the backing layer. In other embodiments, the adhesive tape has a first pressure-sensitive adhesive layer adhered directly or indirectly to a first major surface of the backing layer and a second pressure-sensitive adhesive layer adhered directly or indirectly to a second major surface of the backing layer. When there are two pressure-sensitive adhesive layers, the two layers can be the same or different. Often, the compositions are selected so that the adhesive strength of the first pressure-sensitive adhesive layer is different than the adhesive strength of the second pressure-sensitive adhesive layer.

The adhesive tape, which contains a backing layer and at least one pressure-sensitive adhesive layer, can be formed in any suitable manner. In many embodiments, the backing layer is prepared separately from the pressure-sensitive adhesive layer. After preparation of the backing layer, at least one separately formed pressure-sensitive adhesive layer can be laminated to a major surface of the backing layer. Often a first pressure-sensitive adhesive layer is laminated to a first major surface of the backing layer and a second pressure-sensitive adhesive layer is laminated to a second major surface (i.e., opposite the first major surface) of the backing layer.

In other embodiments, the backing layer is formed and then the first pressure-sensitive adhesive layer is applied to at least one surface of the previously prepared backing layer. That is, the backing layer functions as the support for the deposition of the first pressure-sensitive adhesive layer. Any suitable deposition method can be used such as coating or extrusion. If the adhesive tape has two pressure-sensitive adhesive layers, the second pressure-sensitive adhesive layer can be positioned adjacent to the other major surface (i.e., second major surface) of the backing layer by lamination of a separately formed second pressure-sensitive adhesive layer. Alternatively, a second pressure-sensitive adhesive composition can be coated or extruded onto the other major surface of the backing layer. In this alternative embodiment, the first pressure-sensitive adhesive layer is often positioned adjacent to a first release liner.

In another example of making an adhesive tape with two adhesive layers, the backing layer can be cast between two adhesive layers that are disposed on release liners. That is, the first pressure-sensitive adhesive layer can be prepared on a first release liner, a second pressure-sensitive adhesive layer can be prepared on a second release liner, and the poly(alkylene) copolymer can be cast between the two adhesive layers. The hot poly(alkylene) copolymer extrudate can laminate to the first adhesive layer and to the second adhesive layer. No blocking agent or slip agent is needed. The resulting construction can have the following layers: first release liner - first adhesive layer - backing layer - second adhesive layer - second release liner.

In yet other methods, the backing layer and the pressure-sensitive adhesive layers (one or two depending on whether one or two adhesive layers are desired) can be extruded between two liners. Alternatively, the release liners can also be co-extruded. In most of these methods involving the use of two release liners, additives such as anti-blocking agents and slip agents are not needed. Any other method that can be envisioned to provide or maintain the optical clarity also can be used.

In another aspect, an article is provided. In a first embodiment, the article includes a first substrate and an adhesive tape that is adhered to the first substrate. The adhesive tape includes (A) a backing layer, (B) a first pressure-sensitive adhesive layer that is adjacent to a first major surface of the backing layer, and (C) a tab that extends beyond the first substrate. The adhesive tape is the same as described above. Pulling the tab stretches the adhesive tape and releases the adhesive tape from the first substrate. The adhesive tape is stretchable at least 50 percent in a first direction without breaking when the tab is pulled. In this embodiment of the article, the first pressure-sensitive adhesive layer is positioned between the first substrate and the backing layer with the pressure-sensitive adhesive layer being adhered directly or indirectly to both the first substrate and the backing layer.

In a second embodiment, the article includes a first substrate, a second substrate, and an adhesive tape positioned between the first substrate and the second substrate. The adhesive tape couples the first substrate to the second substrate. The adhesive tape includes a (A) a backing layer, (B) a first pressure-sensitive adhesive layer that is adjacent to a first major surface of the backing layer and a second pressure-sensitive adhesive layer that is adjacent to a second major surface of the backing layer, and (C) a tab that extends beyond at least one of the first substrate and the second substrate, wherein the tab is part of the backing layer or attached to the backing layer. The adhesive tape is the same as described above. Pulling the tab stretches the adhesive tape and releases the adhesive tape from the first substrate, from the second substrate, or from both the first substrate and the second substrate. The adhesive tape is stretchable at least 50 percent in a first direction without breaking when the tab is pulled. In this embodiment of the article, the first pressure-sensitive adhesive layer is positioned between the first substrate and the backing layer with the first pressure-sensitive adhesive layer being adhered directly or indirectly to both the first substrate and the backing layer. Additionally, the second pressure-sensitive adhesive layer is positioned between the second substrate and the backing layer with the second pressure-sensitive adhesive layer being adhered directly or indirectly to both the second substrate and the backing layer.

The coupling step of two substrates with the adhesive tape can include providing the adhesive tape in a form that includes release liners adjacent to each adhesive layer. That is, the adhesive tape can be provided as a construction of layers arranged in the following order: first release liner - first adhesive layer - backing layer - second adhesive layer - second release liner. The first release liner can be removed to expose the first adhesive layer. The exposed first adhesive layer can then be positioned adjacent to the first substrate and adhered directly or indirectly to the first substrate. The second release liner can then be removed to expose the second adhesive layer. The exposed second adhesive layer can then be positioned adjacent to the second substrate and adhered directly or indirectly to the second substrate. Often different release liners are used such that one is removed more readily than the other.

Any suitable substrates can be adhered to each pressure-sensitive adhesive layer. The substrates can provide any desired function, can be formed from any suitable material, and can have any desired flexibility, size, shape, thickness, or aspect ratio. The substrate can be a single layer or can include multiple layers of material such as a support layer, a primer layer, a hard coat layer (e.g., acrylic or polyurethane), a decorative design, or the like. Either substrate or both substrates can be an outer surface layer of another article. Either substrate or both substrates can contain any suitable material such as a polymeric material, glass material, ceramic material, metal-containing material (e.g., metal, metal oxide, metal alloy, or organometallic compound), or a combination thereof.

Exemplary metal, metal oxide, or metal alloy for use in a substrate can contain indium tin oxide, titanium, nickel, steel, aluminum, copper, zinc, iron, cobalt, silver, gold, platinum, lead, and the like. Exemplary polymeric materials for use in the substrate include polycarbonates, polyesters (e.g., polyethylene terephthalates and polyethylene naphthalates), polyurethanes, poly(meth)acrylates (e.g., polymethyl methacrylates), polyvinyl alcohols, polyvinyl chloride, polyolefins such as polyethylenes, polypropylenes, or poly(cyclic olefins) such as polynorbornene, polyvinyl chlorides, polyimides, cellulose triacetates, acrylonitrile-butadiene-styrene copolymers, epoxies, nylons, and the like.

In some articles, the substrate is subjected to a priming treatment prior to attachment to the adhesive tape. Any suitable priming treatment can be used. For polymeric substrates, the priming treatments described above for use with the backing layer can be used. Various known chemical priming treatments can be used with other substrates.

In some embodiments of the article, an optically clear adhesive tape can be positioned between a first substrate and a second substrate such that the second substrate can be seen by viewing through both the first substrate and the second substrate. That is, the region of the adhesive tape that is positioned between the two substrates is optically clear. The second substrate preferably can be viewed without distortion through both the first substrate and the stretch releasable adhesive tape. The second substrate and the first substrate can be, for example, optically coupled. As used herein, the term "optically coupled" means that the any air gap between the first substrate and the second substrate has been eliminated. An air gap can lead to mismatching of refractive indexes between substrates. The optical coupling of the substrates often leads to enhanced brightness and enhanced contrast. Further, the coupling of the substrates can provide increased structural support.

Each substrate can have a variety of functions such as, for example, providing flexibility, rigidity, strength or support, conductivity or insulation, reflectivity, antireflectivity, polarization, or transmissivity (e.g., selective with respect to different wavelengths). That is, the substrate can be flexible or rigid; reflective or non-reflective; visibly clear, colored but transmissive, or opaque (e.g., not transmissive); and polarizing or non-polarizing. The resulting articles can be an optical element or can be used to prepare an optical element. As used herein, the term "optical element" refers to an article or component that has an optical effect or optical application. The optical element can be used, for example, in electronic displays projection devices or applications, photonics devices or applications, and graphic devices or applications.

In some of these devices or applications, at least one of the first substrate and second substrate is selected from an outer layer of a display (e.g, electronic display), polarizer, touch panel, lens, reflector, diffraction grating, mirror, projection prism, or multilayer optical film. Exemplary substrates include, but are not limited to, the outer layer of liquid crystal displays, electrowetting displays, plasma displays, cathode ray tubes, or touch sensors.

More particularly, an article is provided that includes a first substrate, a second substrate, and a stretch releasable adhesive tape positioned between the first substrate and the second substrate. At least one of the first substrate and second substrate is selected from a display, polarizer, touch panel, lens, reflector, diffraction grating, mirror, projection prism, or multilayer optical film. The stretch releasable adhesive tape is optically clear and couples the first substrate to the second substrate. The second substrate is visible when viewed through both the first substrate and the adhesive tape. The stretch releasable adhesive tape includes (A) a backing layer that contains a poly(alkylene) copolymer, (B) a first pressure-sensitive adhesive layer that is adjacent to a first major surface of the backing layer and a second pressure-sensitive adhesive layer that is adjacent to a second major surface of the backing layer, wherein each pressure-sensitive adhesive layer includes a polyisobutylene material, and (C) a tab that extends beyond at least one of the first substrate and the second substrate. The adhesive tape can be stretched at least 50 percent in a first direction without breaking. For example, the length of the adhesive tape can be increased at least 50 percent without breaking.

In some applications, the first substrate is a protective layer that is coupled to a second substrate that is part of an information display device. The protective layer can be a protective film, a layer of glass, a layer of polycarbonate, or the like. The protective layer can function, for example, as a cover lens for the information display device. Examples of information display devices include devices with a wide range of display area configurations including liquid crystal displays, plasma displays, front and rear projection displays, cathode ray tubes, and signage. Such display area configurations can be employed in a variety of portable and non-portable information display devices including personal digital assistants, cell phones, touch-sensitive screens, wrist watches, car navigation systems, global positioning systems, depth finders, calculators, electronic books, CD or DVD players, projection television screens, computer monitors, notebook computer displays, instrument gauges, instrument panel covers, or signage such as graphic displays. In some applications, the bonding of a rigid cover to the display screen with the elimination of any air gap between them can improve the quality of the displayed image.

In some specific applications, the optically clear, stretch releasable adhesive tape can couple an information display device and a cover lens prepared of glass or polycarbonate. That is, the article can have the following construction: cover lens - optically clear, stretch releasable adhesive tape - information display device. More specifically, the article can be arranged in the following order: cover lens - first optically clear adhesive layer - backing layer - second optically clear adhesive layer - information display device. The information display device can be viewed by looking through both the cover lens and the optically clear, stretch releasable adhesive tape. For example, the first substrate can be a cover lens and the second substrate can be a liquid crystal display. The outer surface of the liquid crystal display is often a polarizer. In other example, the first substrate can be a cover lens and the second substrate can be an electrowetting display with an outer surface that is predominately glass.

The optically clear adhesive tape can be used to couple together more than two substrates. That is, the articles can include more than two substrates and more than one optically clear adhesive tape. For example, the article could be arranged in the following order: first substrate - first optically clear, stretch releasable adhesive tape - second substrate - second optically clear, stretch releasable adhesive tape - third substrate. More specifically, the article would be arranged in the following order: first substrate - first optically clear adhesive layer - first backing layer - second optically clear adhesive layer - second substrate - third optically clear adhesive layer - second backing layer - fourth optically clear adhesive layer - third substrate. The third substrate can be viewed by looking through the first substrate, the first optically clear adhesive layer, the second substrate, and the second optically clear adhesive layer. For example, the first substrate can be a cover lens, the second substrate can be a touch panel, and the third substrate can be an information display device such as a liquid crystal display. Touch panels often have an outer surface of glass, polyester, or indium tin oxide.

Alternatively, the optically clear, stretch releasable adhesive tapes can be used to couple two substrates together and another optically clear adhesive can be used to join additional substrates. For example, the article could be arranged in the following order-first substrate - optically clear adhesive - second substrate - optically clear, stretch releasable adhesive tape - third substrate. As a specific example, the first substrate can be a cover lens, the second substrate can be a touch panel, and the third substrate can be an information display device such as a liquid crystal display. This embodiment uses the stretch releasable adhesive tape only to couple the information display device to the rest of the article. Less expensive components can be coupled using an adhesive that is not stretch releasable.

In other applications, at least one of the substrates is an optical film. Any suitable optical film can be used in the articles. As used herein, the term "optical film" refers to a film that can be used to produce an optical effect. The optical films are typically polymer-containing films that can be a single layer or multiple layers. Some optical films have alternating layers of polymeric material with different indexes of refraction. Other optical films have alternating polymeric layers and metal-containing layers. The optical films are flexible and can be of any suitable thickness. The optical films often are at least partially transmissive, reflective, antireflective, polarizing, optically clear, or diffusive with respect to some wavelengths of the electromagnetic spectrum (e.g., wavelengths in the visible ultraviolet, infrared, or radio frequency regions of the electromagnetic spectrum). Exemplary optical films include, but are not limited to, visible mirror films, color mirror films, solar reflective films, infrared reflective films, ultraviolet reflective films, reflective polarizer films such as a brightness enhancement films and dual brightness enhancement films, absorptive polarizer films, optically clear films, tinted films, and antireflective films. Exemplary optical films are further described in the following patents: U.S. Patent Nos. 6,049,419 (Wheatley et al.), 5,882,774 (Jonza et al.), 6,049,419 (Wheatley et al.), RE 34,605 (Schrenk et al.), 5,579,162 (Bjornard et al.), and 5,360,659 (Arends et al.).

The articles that include the two substrates coupled with the stretch releasable adhesive tape can be durable. As used herein, the term "durable" means that the articles can be subjected to elevated temperature (e.g., at least 50°C, at least 60°C, at least 70°C, at least 80°C, or at least 85°C) and humidity conditions (e.g., at least 70 percent relative humidity, at least 75 percent relative humidity, at least 80 percent relative humidity, at least 85 percent relative humidity, or at least 90 percent relative humidity) without delamination. The elevated temperature and relative humidity conditions can be maintained for at least 1 day, at least 2 days, at least 3 days, at least 4 days, at least 5 days, at least 6 days, or at least 7 days. For example, the articles can be subjected to conditions such as 60°C and 90 percent relative humidity or 85°C and 85 percent relative humidity for 1 week without delamination. In many embodiments where the adhesive tape is optically clear, the adhesive tape remains optically clear even after exposure to the elevated temperature and humidity conditions. For example, the haze can remain no greater than 5 and the luminous transmittance can be at least 90 percent. Preferably no bubbles form in the article and no optical distortions result from being subjected to the elevated temperature and humidity conditions.

Stated differently, the pressure-sensitive adhesive layers can typically be removed (debonded) leaving little or no residue. After removal of the adhesive layer, the substrate is free or substantially free of the adhesive. For example, the adhesive layer can be adhered to a glass substrate for extended periods such as at least 1 week or at least 4 weeks and then be removed such that the glass substrate is free (i.e., no adhesive residue) or substantially free (i.e., almost no adhesive residue) of the adhesive.

Additionally, the adhesive tapes or pressure-sensitive adhesive layers preferably do not become yellow when exposed to the elevated temperature and humidity conditions. That is, the adhesive tapes can have resistance of ultraviolet radiation for extended periods of time. Still further, the adhesive tapes can be used under conditions where there is exposure to moisture. The adhesives can often be used in both indoor and outdoor applications.

Still further, the adhesive tapes can be used under elevated humidity conditions. Stated differently, the adhesive composition that includes the polyisobutylene material can function as a water barrier. The adhesive tapes tend to remain transparent and tend to retain their adhesive characteristics under elevated humidity conditions. The adhesive layers usually can be positioned next to a substrate that is prone to outgassing. Substrates such as polycarbonate or poly(meth)acrylates are prone to outgassing when the thickness is greater than about 1 millimeter, greater than about 2 millimeters, greater than about 5 millimeters, or greater than about 10 millimeters. Outgassing substrates can adversely affect the stability, clarity, bond strength, or other desirable performance characteristics when an incompatible adhesive layer is adjacent to the substrate. Applying an incompatible adhesive layer adjacent to an outgassing substrate may result in defects such as bubbles or may result in partial or full delamination of the adhesive layer from the substrate. The adhesive layers described herein that include polyisobutylene materials but little or no tackifying resin typically do not result in the formation of bubbles or delaminate when positioned next to outgassing substrates.

The adhesive layers are usually formulated such that they are free or substantially free of acidic groups such as carboxy groups (i.e., -COOH). Because the adhesive composition can be formulated without acidic groups, the adhesive layers can be positioned next to a surface that is sensitive to the presence of acidic material. For example, the adhesive layers can be positioned in contact with electrode materials such as indium tin oxide or other metal-containing materials.

The dual sided adhesive tape can be adhered to two substrates (i.e., the adhesive tape can be positioned between the two substrates) and then released from one or both substrates by stretching the backing layer and the adhesive layers of the adhesive tape. After being released, adhesive tape can be removed from between the two substrates and the substrates can be separated from each other. The adhesive tape can be constructed so that the first pressure-sensitive adhesive layer can be released from the first substrate prior to completely releasing the second pressure-sensitive adhesive from the second substrate. That is, the adhesive tape can be constructed to provide controlled sequential release from the first substrate and from the second substrate. This can often be accomplished by variation in the composition of the first pressure-sensitive adhesive and the second pressure-sensitive adhesive layers. Alternatively, this can be accomplished by having non-adhesive zones in one of the pressure-sensitive adhesive layers as described in U.S. Patent No. 6,001,471 (Bries et al.).

The adhesive tape can be released by stretching in the event that the coupling of the two substrates is defective. Defects during fabrication can result from misalignment of the two substrates, entrapment of bubbles between the two substrates, or formation of patterns or creases. Alternatively, the substrates can be separated to allow at least one of the substrates to be used again. Typically, the stretch releasing adhesive tape can be cleanly removed from between the substrates with little or no visible adhesive residue remaining on either substrate. Additionally, the stretch releasing adhesive tape usually can be removed without damaging the appearance, function, or performance of either substrate. Even though the adhesive tape can be removed easily by stretching, the adhesive tape can provide high load shear adhesion prior to being stretched.

Also, over the lifetime of the device, if it is desirable to remove one of the substrates for replacement or recycling, the two substrates can be separated by stretch releasing the adhesive tape between the substrates. The substrates can be separated without damage to either substrate. This is an advantage over many other separation methods that typically introduce levels of stress than can damage one or both of the substrates. Such separation can be very difficult with many known pressure-sensitive adhesives.

In some applications it may be desirable to use a winding tool to aid the stretch release process and facilitate removal of the adhesive tape from between the two substrates. Such a winding tool can be as simple as a cylinder to which the tab of the adhesive tape is attached. The winding tool can be rotated to permit winding of the adhesive tape as it is stretched. Such a process could be mechanized using a powered roller of sufficient width so that the entire width of the tab can be simultaneously and smoothly pulled to release the adhesive tape from the substrates by zero degree peel. The stress and the rate of strain applied to the adhesive tape by the mechanized device could be controlled to release and remove the adhesive tape without tearing the backing layer and without leaving any adhesive residue on the substrates. The mechanized approach would be particularly advantageous for the decoupling of large substrates such as large format electronic displays or graphics. Vacuum manipulation devices could be used to lift and support the substrates during the decoupling step. By securing the substrates with vacuum manipulation tools, the substrates could be secured without introducing additional compressive force on the adhesive tape that could inhibit or prevent the release and removal of the adhesive tape from between the two substrates. Also, the vacuum manipulation tools could be used to collect the substrates without damage after removal of the adhesive tape.

### EXAMPLES

These examples are for illustrative purposes only and are not meant to be limiting on the scope of the appended claims. All parts, percentages, and ratios in the examples and the rest of the specification are based on weight, unless noted otherwise. Solvents and other reagents used were obtained from Sigma-Aldrich Chemical Company (Milwaukee, WI) unless otherwise noted.

### Materials

pBDA refers to polybutadiene diacrylate which is available from San Ester Corporation, New York, NY.

ESCOREZ 5340 is a trade designation for a cycloaliphatic hydrocarbon tackifying resin available from ExxonMobil Chemical, Houston, TX.

BP refers to benzophenone, available from Sigma-Aldrich Chemical Company (Milwaukee, WI)

BPO refers to benzoyl peroxide, available from Sigma-Aldrich Chemical Company (Milwaukee, WI).

IRGANOX 1010 is the trade designation of tetrakis-(methylene-(3,5-di-(tert)-_ butyl-4-hydrocinnamate))methane, commercially available from Ciba-Geigy (Hawthorne, NY). This compound is used as an antioxidant.

UVINOL D50 refers to 2,2',4,4'-tetrahydroxybenzophenone commercially available from BASF (Ludwigshafen, Germany). This compound is used as a UV absorber.

EXACT 5181 is a trade designation for an ethylene-octene copolymer with a melt index of 1.1 grams/10 minutes and a density of 0.87 grams per cubic centimeter that is available from ExxonMobil (Houston, TX).

EXACT 8210 is a trade designation for an ethylene-octene copolymer with a melt index of 10 grams/10 minutes and a density of 0.882 grams per cubic centimeter that is available from ExxonMobil (Houston, TX).

PET refers to a polyethylene terephthalate film that is 2 mils (1 mil is equal to 0.001 inch) thick and that is commercially available under the trade designation SCOTCHPAR from 3M (St. Paul, MN).

Polyisobutylene (PIB) under the trade name OPPANOL B 15, OPPANOL B30, OPPANOL B50, OPPANOL B80, and OPPANOL B100 were obtained from BASF Corporation, Florham Park, NJ. OPPANOL B 15, which is referred to as B 15, has a number average molecular weight of about 75,000 grams/mole and a weight average molecular weight of 255,000 gram/mole. OPPANOL B30, which is referred to as B30, has a number average molecular weight of about 73,000 gram/mole. OPPANOL B50, which is referred to as B50, has number average molecular weight of about 120,000 gram/mole. OPPANOL B80, which is referred to as B80, has a number average molecular weight of about 200,000 grams/mole.

Aldrich-1 refers to a polyisobutylene homopolymer with a weight average molecular weight of 1,000,000 grams/mole that was obtained from Sigma-Aldrich (Milwaukee, WI).

Aldrich-2 refers to a polyisobutylene homopolymer with a weight average molecular weight of 4,200,000 grams/mole that was obtained from Sigma-Aldrich (Milwaukee, WI).

### Test Methods

### Stretch release stress measurement

A double-coated adhesive tape strip (1.25 cm by 2.5 cm) was placed between two glass microscope slides (7.6 cm by 3.80 cm ) leaving a 25 mm tab protruding from one end of the assembly. The assembly was pressed twice with a 4.5 kg roller to firmly bond the adhesive strip to the slides. The assembly was mounted in a tensile testing machine (INSTRON Model 4501 from Instron Co., Canton, MA) so that the glass slides were gripped in the lower (fixed) jaws, and the tab was clamped in the upper (crosshead) jaws. The jaws were separated at a rate of 30.5 cm/min, and the average force required to effect debonding by stretching (debond stress in N/cm2) was recorded. The results were characterized by either a "Yes" indicating that the adhesive tape was cleanly removed from one of the two substrate or a "No" indicating that the substantial residue was left on the substrate it was removed from.

### Haze and Luminous Transmittance

Haze and luminous transmittance was determined using a Gardner BYK Color TCS Plus model 8870 spectrophotometer from BYK Gardner, (Columbia, Md.) as described in ASTM Method 1003-07. CIE Standard Illuminant A was used. Percent haze and percent luminous transmittance were recorded.

### Preparation of backing layers:

Backing layers were prepared in a 0.75 inch BRABENDER laboratory extruder Model D-5 with a mixing screw that is commercially available from C.W. Brabender Instruments Inc. (So. Hackensack, NJ). After melting and mixing backing resin, the extrudate was forced through a 6 inch flat cast extrusion die to form a film. The temperatures within the extruder were 160°C (zone 1), 180°C (zone 2), 190°C (zone 3), 190°C (adapter), and 190°C (die) respectively. The extruded film was then cast between two PET films. The resulting laminate (PET/extrudate film/PET) was passed through a chilled roll stack to cool and solidify the resin copolymer. The line speed was adjusted to produce a solidified film with the desired caliper. Backing layers were pretreated prior to lamination to the PSA layer using an air corona treatment device Model BD-20 (Electronic Products, Inc., Chicago, IL). Each face of the film was exposed to the corona treatment at a rate of 0.5 square feet per minute immediately prior to lamination of the PSA layer.

### Examples 1 to 31

PIB alone or mixtures of PIB with tackifier were prepared in the ratio as specified in column 2 of Table 1. The percent solids are shown in column 3 of Table 1. The other components of the adhesive composition are shown in columns 5 to 9 of Table 1. Each adhesive composition was coated on a silicone-treated PET release liner (CLEARSIL T50 from CP Films of St. Louis, MO). This coated sample was dried in oven at 70° C for 50 minutes and was kept in the ambient temperature overnight prior to testing. For thermal cure, the sample was placed in oven at 150°C for 5 minutes. For UV cure, the sample was irradiated with a Fusion UV Curing System using Fusion "H" bulb with a total dose of 500mJ/cm2 or 750mJ/cm2. After irradiation, these samples were stored at ambient temperature overnight prior to testing.

Adhesive tapes were prepared by laminating the PSA layer prepared above on to the backing layer, which is identified in Table 1 for each example. The lamination was carried out at room temperature by removing one silicone-treated PET release liner from the PSA layer, contacting the exposed PSA layer surface to the backing layer, and rolling the adhesive down onto the backing layer using a 4.5 pound rubber covered roller. This procedure was repeated for the opposite side of the backing layer to produce the adhesive tape with a PSA layer on both sides of the backing layer. Various characteristic properties of the adhesive tapes were measured and the results are listed in Table 2.

**Table-1**

| Example No. | PIB and Tackifier (wt-%) | Solids (wt-%) | pBDA (phr) | BPO (phr) | BP (phr) | UVINOL D50 (phr) | IRGANOX 1010 (phr) | Curing conditions | Backing |
|---|---|---|---|---|---|---|---|---|---|
| 1 | B15 (100) | 25 | | | | | | | EXACT 8210 |
| 2 | B30 (100) | 25 | | | | | | | EXACT 8210 |
| 3 | B50 (100) | 10 | | | | | | | EXACT 8210 |
| 4 | B80 (100) | 10 | | | | | | | EXACT 8210 |
| 5. | Aldrich-1 (100) | 5 | | | | | | | EXACT 8210 |
| 6 | Aldrich-2 (100) | 5 | | | | | | | EXACT 8210 |
| 7 | B30/B15 (95/5) | 20 | | | | | | | EXACT 8210 |
| 8 | B30/B15 (80/20) | 20 | | | | | | | EXACT 8210 |
| 9 | B100/B30/B10 (22/67/11) | 20 | | | | | | | EXACT 8210 |
| 10 | B30 ESCOREZ 5340 (90/10) | 15 | | | | | | | EXACT 8210 |
| 11 | B30 ESCOREZ 5340 (80/20) | 15 | | | | | | | EXACT 8210 |
| 12 | B30 ESCOREZ 5340 (70/30) | 15 | | | | | | | EXACT 8210 |
| 13 | B80 ESCOREZ 5340 (70/30) | 10 | | | | | | | EXACT 8210 |
| 14 | B100 ESCOREZ 5340 (70/30) | 10 | | | | | | | EXACT 8210 |
| 15 | B200 ESCOREZ 5340 (70/30) | 5 | | | | | | | EXACT 8210 |
| 16 | B50/B30 ESCOREZ 5340 (40/40/20) | 25 | | | | | | | EXACT 8210 |
| 17 | B50/B30 ESCOREZ 5340 (20/60/20) | 25 | | | | | | | EXACT 8210 |
| 18 | B15 (100) | 25 | 2 | 0.75 | | 0.15 | 0.15 | Thermal | EXACT 5181 |
| 19 | B30/B15 (80/20) | 20 | 2 | 0.75 | | 0.15 | 0.15 | Thermal | EXACT 8210 |
| 20 | B30/B15 (70/30) | 20 | 2 | 0.75 | | 0.15 | 0.15 | Thermal | EXACT 8210 |
| 21 | B30 ESCOREZ 5340 (80/20) | 15 | 2 | 0.75 | | 0.15 | 0.15 | Thermal | EXACT 8210 |
| 22 | B50/B30 ESCOREZ 5340 (40/40/20) | 25 | 2 | 0.75 | | 0.15 | 0.15 | Thermal | EXACT 8210 |
| 23 | B15 (100) | 25 | 2 | | 0.75 | 0.15 | 0.15 | 500 mJ/cm² | EXACT 8210 |
| 24 | B15 (100) | 25 | 2 | | 0.75 | 0.15 | 0.15 | 750mJ/cm² | EXACT 8210 |
| 25 | B30/B15 (80/20) | 20 | 2 | | 0.75 | 0.15 | 0.15 | 500mJ/cm² | EXACT 8210 |
| 26 | B30/B15 (80/20) | 20 | 2 | | 0.75 | 0.15 | 0.15 | 750 mJ/cm² | EXACT 8210 |
| 27 | B30/B15 (70/30) | 20 | 2 | | 0.75 | 0.15 | 0.15 | 500 mJ/cm² | EXACT 8210 |
| 28 | B30/B15 (70/30) | 20 | 2 | | 0.75 | 0.15 | 0.15 | 750 mJ/cm² | EXACT 8210 |
| 29 | B30 | 15 | 2 | | 0.75 | 0.15 | 0.15 | 750mJ/cm² | EXACT |
| | ESCOREZ 5340 (80/20) | | | | | | | | 8210 |
| 30 | B50/B30 ESCOREZ 5340 (40/40/20) | 25 | 2 | | 0.75 | 0.15 | 0.15 | 500 mJ/cm² | EXACT 8210 |
| 31 | B50/B30 ESCOREZ 5340 (40/40/20) | 25 | 2 | | 0.75 | 0.15 | 0.15 | 750 mJ/cm² | EXACT 8210 |

**Table-2**

| Example No. | Debond Stress (N/cm2 | Clean Removal | Transmittance (%) | Haze (%) |
|---|---|---|---|---|
| 1 | 615 | no | 90 | 4.3 |
| 2 | 225 | yes | 92 | 2.5 |
| 3 | 254 | yes | Not tested | Not tested |
| 4 | 227 | yes | Not tested | Not tested |
| 5 | 400 | yes | Not tested | Not tested |
| 6 | 256 | yes | Not tested | Not tested |
| 7 | 356 | yes | Not tested | Not tested |
| 8 | 336 | no | 92 | 3.5 |
| 9 | 305 | ves | 92 | 1.1 |
| 10 | 329 | yes | Not tested | Not tested |
| 11 | 402 | yes | 91 | 2.2 |
| 12 | 363 | yes | Not tested | Not tested |
| 13 | 360 | ves | Not tested | Not tested |
| 14 | 414 | yes | Not tested | Not tested |
| 15 | 440 | yes | Not tested | Not tested |
| 16 | 374 | yes | 92 | 3.5 |
| 17 | 383 | yes | Not tested | Not tested |
| 18 | 567 | no | Not tested | Not tested |
| 19 | 343 | yes | 92 | 1.3 |
| 20 | 404 | yes | 91 | 2.9 |
| 21 | 328 | yes | 90 | 2.6 |
| 22 | 335 | yes | 91 | 3.4 |
| 23 | 677 | no | Not tested | Not tested |
| 24 | 658 | no | 91 | 3.1 |
| 25 | 343 | no | 90 | 2.5 |
| 26 | 332 | yes | Not tested | Not tested |
| 27 | 533 | no | 90 | 2.8 |
| 28 | 380 | yes | Not tested | Not tested |
| 29 | 363 | yes | 90 | 2.7 |
| 30 | 334 | yes | 90 | 3.5 |
| 31 | 354 | yes | Not tested | Not tested |

## Claims

1. An adhesive tape comprising:
a backing layer having a haze no greater than 5 percent and a luminous transmittance equal to at least 85 percent as measured using method ASTM D1003-07, the backing layer comprising a poly(alkylene) copolymer comprising a polymerized product of a reaction mixture comprising
(1) a first alkene selected from ethene, propene, or a mixture thereof; and
(2) a second alkene selected from a 1,2-alkene having 4 to 8 carbon atoms; and
at least one pressure-sensitive adhesive layer adjacent to a major surface of the backing layer, the pressure-sensitive adhesive layer comprising a polyisobutylene material, wherein the adhesive tape is stretchable at least 50 percent in a first direction without breaking.

2. The adhesive tape of claim 1, wherein the polyisobutylene material is cured.

3. The adhesive tape of claim 1, wherein pressure-sensitive adhesive layer further comprises a tackifying resin.

4. The adhesive tape of claim 1 or 2, wherein the pressure-sensitive adhesive layer comprises (a) the polyisobutylene material and (b) a tackifying resin in an amount in the range of 0 to less than 10 weight percent based on a total solids content of the adhesive layer, wherein the polyisobutylene material comprises a first polyisobutylene with a weight average molecular weight in the range of 75,000 to 4,200,000 gram/mole.

5. The adhesive tape of claim 4, wherein the first polyisobutylene is present in an amount equal to at least 90 weight percent based on a total weight of the polyisobutylene material.

6. The adhesive tape of claim 1 or 2, wherein the pressure-sensitive adhesive layer comprises (a) the polyisobutylene material in an amount in the range of 40 to 90 weight percent based on a total solids content of the adhesive layer and (b) a tackifying resin in an amount in the range of 10 to 60 weight percent based on the total solids content of the adhesive layer, wherein the polyisobutylene material comprises a first polyisobutylene having a weight average molecular weight in the range of 85,000 to 4,200,000 grams/mole.

7. The adhesive tape of claim 6, wherein the first polyisobutylene is present in an amount equal to at least 90 weight percent based on a total weight of the polyisobutylene material.

8. The adhesive tape of claim 1 or 2, wherein the pressure-sensitive adhesive layer comprises (a) the polyisobutylene material and (b) a tackifying resin in an amount in the range of 0 to less than 10 weight percent based on a total solids content of the adhesive layer, wherein the polyisobutylene material comprises (i) a first polyisobutylene having a weight average molecular weight in a range of 200,000 grams/mole to 4,200,000 gram/mole in an amount in the range of 50 to 90 weight percent based on a total weight of the polyisobutylene material and (ii) a second polyisobutylene having a weight average molecular weight in a range of 1,000 to 80,000 grams/mole in an amount in the range of 10 to 50 weight percent based on the total weight of the polyisobutylene material.

9. The adhesive tape of claim 1 or 2, wherein the pressure-sensitive adhesive layer comprises (a) the polyisobutylene material and (b) a tackifying resin in an amount in the range of 0 to less than 10 weight percent based on a total solids content of the adhesive layer, wherein the polyisobutylene material comprises (i) a first polyisobutylene having a weight average molecular weight in a range of 300,000 to 4,200,000 grams/mole in an amount in the range of 10 to 40 weight percent based on a total weight of the polyisobutylene material, (ii) a second polyisobutylene having a weight average molecular weight in the range of greater than 50,000 to 250,000 gram/mole in an amount in the range of 50 to 70 weight percent based on the total weight of the polyisobutylene material, (iii) a third polyisobutylene having a weight average molecular weight in the range of 1,000 to 50,000 grams/mole in an amount in the range of 10 to 20 weight percent based on the total weight of the polyisobutylene material.

10. The adhesive tape of claim 1 or 2, wherein the pressure-sensitive adhesive layer comprises (a) the polyisobutylene material in an amount in the range of 70 to 90 weight percent based on a total solids content of the adhesive layer and (b) a tackifying resin in an amount in the range of 10 to 30 weight percent based on the total solids content of the adhesive layer, wherein the polyisobutylene material comprises (i) a first polyisobutylene having a weight average molecular weight in the range of 100,000 to 4,200,000 grams/mole in an amount in the range of 10 to 30 weight percent based on a total weight of the polyisobutylene material and (ii) a second polyisobutylene having a weight average molecular weight in the range of 30,000 to 75,000 grams/mole in an amount in the range of 70 to 90 weight percent based on the total weight of the polyisobutylene material.

11. The adhesive tape of any one of claim 1 to 10, wherein the poly(alkylene) copolymer has a specific gravity in the range of 0.86 to 0.91.

12. The adhesive tape of any one of claim 1 to 11, wherein each pressure-sensitive adhesive layer is optically clear.

13. The adhesive tape of any one of claim 1 to 12, wherein the adhesive tape comprises the backing layer, a first pressure-sensitive adhesive layer adjacent to a first major surface of the backing layer, and a second pressure-sensitive adhesive layer adjacent to a second major surface of the backing layer.

14. An article comprising:
a first substrate; and
an adhesive tape adhered to the first substrate, the adhesive tape comprising
(A) a backing layer comprising a poly(alkylene) copolymer comprising a polymerized product of a first polymerizable reaction mixture comprising
(1) a first alkene selected from ethene, propene, or a mixture thereof; and
(2) a second alkene selected from a 1,2-alkene having 4 to 8 carbon atoms,
wherein the backing layer has a haze no greater than 5 percent and a luminous transmittance equal to at least 85 percent using ASTM D1003-07;
(B) a first pressure-sensitive adhesive layer that is adjacent to a first major surface of the backing layer, wherein the first pressure-sensitive adhesive layer comprises a polyisobutylene material; and
(C) a tab that extends beyond the first substrate, wherein pulling the tab stretches the adhesive tape and releases the adhesive tape from the first substrate, wherein the adhesive tape is stretchable at least 50 percent in a first direction without breaking when the tab is pulled.

15. An article comprising:
a first substrate;
a second substrate; and
an adhesive tape positioned between the first substrate and the second substrate, wherein the adhesive tape couples the first substrate to the second substrate, the adhesive tape comprising
(A) a backing layer comprising a poly(alkylene) copolymer comprising a polymerized product of a first polymerizable reaction mixture comprising
(1) a first alkene selected from ethene, propene, or a mixture thereof; and
(2) a second alkene selected from a 1,2-alkene having 4 to 8 carbon atoms,
wherein the backing layer has a haze no greater than 5 percent and a luminous transmittance equal to at least 85 percent using ASTM D1003-07;
(B) a first pressure-sensitive adhesive layer that is adjacent to a first major surface of the backing layer and a second pressure-sensitive adhesive layer that is adjacent to a second major surface of the backing layer, wherein the first pressure-sensitive adhesive layer and the second pressure-sensitive adhesive layer each comprise a polyisobutylene material; and
(C) a tab that extends beyond at least one of the first substrate and the second substrate, wherein pulling the tab stretches the adhesive tape and releases the adhesive tape from the first substrate, from the second substrate, or from both the first substrate and the second substrate, wherein the adhesive tape is stretchable at least 50 percent in a first direction without breaking when the tab is pulled.

## Patentansprüche

1. Klebstoffband, Folgendes umfassend:
eine Trägerschicht, die eine Trübung von nicht mehr als 5 Prozent und einen Lichttransmissionsgrad gleich mindestens 85 Prozent aufweist, wie unter Anwendung des ASTM-Verfahrens D1003-07 gemessen, wobei die Trägerschicht ein Poly(alkylen)-Copolymer umfasst, das ein polymerisiertes Produkt eines Reaktionsgemischs umfasst, das Folgendes umfasst:
(1) ein erstes Alken, das aus Ethen, Propen oder einer Mischung daraus ausgewählt ist, und
(2) ein zweites Alken, das aus 1,2-Alken mit 4 bis 8 Kohlenstoffatomen ausgewählt ist,
und
mindestens eine Haftklebstoff-Schicht, die an eine Hauptfläche der Trägerschicht grenzt, wobei die Haftklebstoff-Schicht ein Polyisobutylen-Material umfasst, wobei das Klebstoffband in eine erste Richtung zu mindestens 50 Prozent dehnbar ist, ohne zu reißen.

2. Klebstoffband nach Anspruch 1, wobei das Polyisobutylen-Material gehärtet ist.

3. Klebstoffband nach Anspruch 1, wobei die Haftklebstoff-Schicht ferner ein klebrig machendes Harz umfasst.

4. Klebstoffband nach Anspruch 1 oder 2, wobei die Haftklebstoff-Schicht (a) das Polyisobutylen-Material und (b), basierend auf einem Gesamtfeststoffgehalt der Klebstoffschicht, ein klebrig machendes Harz in einer Menge im Bereich von 0 bis weniger als 10 Gewichtsprozent umfasst, wobei das Polyisobutylen-Material ein erstes Polyisobutylen mit einem gewichtsmittleren Molekulargewicht im Bereich von 75.000 bis 4.200.000 Gramm/Mol umfasst.

5. Klebstoffband nach Anspruch 4, wobei das erste Polyisobutylen in einer Menge vorhanden ist, die basierend auf einem Gesamtgewicht des Polyisobutylen-Materials, gleich mindestens 90 Gewichtsprozent ist.

6. Klebstoffband nach Anspruch 1 oder 2, wobei die Haftklebstoff-Schicht (a) das Polyisobutylen-Material, basierend auf einem Gesamtfeststoffgehalt der Klebstoffschicht, in einer Menge im Bereich von 40 bis 90 Gewichtsprozent umfasst und (b) das klebrig machende Harz, basierend auf dem Gesamtfeststoffgehalt der Klebstoffschicht, in einer Menge im Bereich von 10 bis 60 Gewichtsprozent, wobei das Polyisobutylen-Material ein erstes Polyisobutylen mit einem gewichtsmittleren Molekulargewicht im Bereich von 85.000 bis 4.200.000 Gramm/Mol umfasst.

7. Klebstoffband nach Anspruch 6, wobei das erste Polyisobutylen in einer Menge vorhanden ist, die basierend auf einem Gesamtgewicht des Polyisobutylen-Materials gleich mindestens 90 Gewichtsprozent ist.

8. Klebstoffband nach Anspruch 1 oder 2, wobei die Haftklebstoff-Schicht (a) das Polyisobutylen-Material und (b), basierend auf einem Gesamtfeststoffgehalt der Klebstoffschicht, ein klebrig machendes Harz in einer Menge im Bereich von 0 bis weniger als 10 Gewichtsprozent umfasst, wobei das Polyisobutylen-Material (i), basierend auf einem Gesamtgewicht des Polyisobutylen-Materials, ein erstes Polyisobutylen mit einem gewichtsmittleren Molekulargewicht im Bereich von 200.000 bis 4.200.000 Gramm/Mol in einer Menge im Bereich von 50 bis 90 Gewichtsprozent umfasst und (ii), basierend auf dem Gesamtgewicht des Polyisobutylen-Materials, ein zweites Polyisobutylen mit einem gewichtsmittleren Molekulargewicht im Bereich von 1.000 bis 80.000 Gramm/Mol in einer Menge im Bereich von 10 bis 50 Gewichtsprozent.

9. Klebstoffband nach Anspruch 1 oder 2, wobei die Haftklebstoff-Schicht (a) das Polyisobutylen-Material und (b), basierend auf einem Gesamtfeststoffgehalt der Klebstoffschicht, ein klebrig machendes Harz in einer Menge im Bereich von 0 bis weniger als 10 Gewichtsprozent umfasst, wobei das Polyisobutylen-Material (i), basierend auf einem Gesamtgewicht des Polyisobutylen-Materials, ein erstes Polyisobutylen mit einem gewichtsmittleren Molekulargewicht im Bereich von 300.000 bis 4.200.000 Gramm/Mol in einer Menge im Bereich von 10 bis 40 Gewichtsprozent umfasst, (ii), basierend auf dem Gesamtgewicht des Polyisobutylen-Materials, ein zweites Polyisobutylen mit einem gewichtsmittleren Molekulargewicht im Bereich von mehr als 50.000 bis 250.000 Gramm/Mol in einer Menge im Bereich von 50 bis 70 Gewichtsprozent, (iii), basierend auf dem Gesamtgewicht des Polyisobutylen-Materials, ein drittes Polyisobutylen mit einem gewichtsmittleren Molekulargewicht im Bereich von 1.000 bis 50.000 Gramm/Mol in einer Menge im Bereich von 10 bis 20 Gewichtsprozent.

10. Klebstoffband nach Anspruch 1 oder 2, wobei die Haftklebstoff-Schicht (a) das Polyisobutylen-Material, basierend auf einem Gesamtfeststoffgehalt der Klebstoffschicht, in einer Menge im Bereich von 70 bis 90 Gewichtsprozent umfasst und (b) ein klebrig machendes Harz, basierend auf dem Gesamtfeststoffgehalt der Klebstoffschicht, in einer Menge im Bereich von 10 bis 30 Gewichtsprozent, wobei das Polyisobutylen-Material (i), basierend auf einem Gesamtgewicht des Polyisobutylen-Materials, ein erstes Polyisobutylen mit einem gewichtsmittleren Molekulargewicht im Bereich von 100.000 bis 4.200.000 Gramm/Mol in einer Menge im Bereich von 10 bis 30 Gewichtsprozent umfasst und (ii), basierend auf dem Gesamtgewicht des Polyisobutylen-Materials, ein zweites Polyisobutylen mit einem gewichtsmittleren Molekulargewicht im Bereich von 30.000 bis 75.000 Gramm/Mol in einer Menge im Bereich von 70 bis 90 Gewichtsprozent.

11. Klebstoffband nach einem der Ansprüche 1 bis 10, wobei das Poly(alkylen)-Copolymer eine spezifische Dichte im Bereich von 0,86 bis 0,91 aufweist.

12. Klebstoffband nach einem der Ansprüche 1 bis 11, wobei jede Haftklebstoff-Schicht optisch klar ist.

13. Klebstoffband nach einem der Ansprüche 1 bis 12, wobei das Klebstoffband die Trägerschicht, eine erste Haftklebstoff-Schicht, die an eine erste Hauptfläche der Trägerschicht grenzt, und eine zweite Haftklebstoff-Schicht, die an eine zweite Hauptfläche der Trägerschicht grenzt, umfasst.

14. Gegenstand, Folgendes umfassend:
ein erstes Substrat und
ein Klebstoffband, das am ersten Substrat haftet, wobei das Klebstoffband Folgendes umfasst:
(A) eine Trägerschicht, die ein Poly(alkylen)-Copolymer umfasst, das ein polymerisiertes Produkt eines ersten polymerisierbaren Reaktionsgemischs umfasst, das Folgendes umfasst:
(1) ein erstes Alken, das aus Ethen, Propen oder einer Mischung daraus ausgewählt ist, und
(2) ein zweites Alken, das aus 1,2-Alken mit 4 bis 8 Kohlenstoffatomen ausgewählt ist,
wobei die Trägerschicht eine Trübung von nicht mehr als 5 Prozent aufweist und einen Lichttransmissionsgrad gleich mindestens 85 Prozent, wie unter Anwendung des ASTM-Verfahrens D1003-07 gemessen,
(B) eine erste Haftklebstoff-Schicht, die an eine erste Hauptfläche der Trägerschicht grenzt, wobei die erste Haftklebstoff-Schicht ein Polyisobutylen-Material umfasst, und
(C) einen Streifen, der sich über das erste Substrat hinaus erstreckt, wobei das Ziehen am Streifen das Klebstoffband dehnt und das Klebstoffband vom ersten Substrat löst, wobei das Klebstoffband in eine erste Richtung zu mindestens 50 Prozent dehnbar ist, ohne zu reißen, wenn am Streifen gezogen wird.

15. Gegenstand, Folgendes umfassend:
ein erstes Substrat,
ein zweites Substrat und
ein Klebstoffband, das zwischen dem ersten Substrat und dem zweiten Substrat angeordnet ist, wobei das Klebstoffband das erste Substrat mit dem zweiten Substrat verbindet, wobei das Klebstoffband Folgendes umfasst:
(A) eine Trägerschicht, die ein Poly(alkylen)-Copolymer umfasst, das ein polymerisiertes Produkt eines ersten polymerisierbaren Reaktionsgemischs umfasst, das Folgendes umfasst:
(1) ein erstes Alken, das aus Ethen, Propen oder einer Mischung daraus ausgewählt ist, und
(2) ein zweites Alken, das aus 1,2-Alken mit 4 bis 8 Kohlenstoffatomen ausgewählt ist,
wobei die Trägerschicht eine Trübung von nicht mehr als 5 Prozent aufweist und einen Lichttransmissionsgrad gleich mindestens 85 Prozent, wie unter Anwendung des ASTM-Verfahrens D1003-07 gemessen,
(B) eine erste Haftklebstoff-Schicht, die an eine erste Hauptfläche der Trägerschicht grenzt, und eine zweite Haftklebstoff-Schicht, die an eine zweite Hauptfläche der Trägerschicht grenzt, wobei die erste Haftklebstoff-Schicht und die zweite Haftklebstoff-Schicht jeweils ein Polyisobutylen-Material umfassen, und
(C) einen Streifen, der sich über das erste Substrat und/oder das zweite Substrat hinaus erstreckt, wobei das Ziehen am Streifen das Klebstoffband dehnt und das Klebstoffband vom ersten Substrat, vom zweiten Substrat oder von sowohl dem ersten als auch dem zweiten Substrat löst, wobei das Klebstoffband in eine erste Richtung zu mindestens 50 Prozent dehnbar ist, ohne zu reißen, wenn am Streifen gezogen wird.

## Revendications

1. Ruban adhésif comprenant :
une couche de support ayant un trouble qui n'est pas supérieur à 5 % et un facteur de transmission lumineuse égal à au moins 85 %, mesuré en utilisant la méthode ASTM D1003-07, la couche de support comprenant un copolymère poly(alkylène) contenant un produit polymérisé d'un mélange réactionnel comprenant
(1) un premier alcène sélectionné parmi l'éthène, le propène, ou un mélange de ceux-ci ; et
(2) un deuxième alcène sélectionné à partir d'un 1,2-alcène comportant 4 à 8 atomes de carbone ;
et
au moins une couche d'adhésif sensible à la pression adjacente à une surface principale de la couche de support, la couche d'adhésif sensible à la pression comprenant un matériau polyisobutylène, le ruban adhésif pouvant être allongé d'au moins 50 % dans une première direction sans se rompre.

2. Ruban adhésif selon la revendication 1, dans lequel le matériau polyisobutylène est durci.

3. Ruban adhésif selon la revendication 1, dans lequel la couche d'adhésif sensible à la pression comprend en outre une résine tackifiante.

4. Ruban adhésif selon la revendication 1 ou 2, dans lequel la couche d'adhésif sensible à la pression comprend (a) le matériau polyisobutylène et (b) une résine tackifiante dans une quantité de 0 à moins de 10 % en poids relativement aux matières solides totales de la couche d'adhésif, le matériau polyisobutylène comprenant un premier polyisobutylène ayant une masse moléculaire moyenne en poids de 75 000 grammes/mole à 4 200 000 grammes/mole.

5. Ruban adhésif selon la revendication 4, dans lequel le premier polyisobutylène est présent dans une quantité égale à au moins 90 % en poids relativement à un poids total du matériau polyisobutylène.

6. Ruban adhésif selon la revendication 1 ou 2, dans lequel la couche d'adhésif sensible à la pression comprend (a) le matériau polyisobutylène dans une quantité de 40 % à 90 % en poids relativement aux matières solides totales de la couche d'adhésif et (b) une résine tackifiante dans une quantité de 10 % à 60 % en poids relativement aux matières solides totales de la couche d'adhésif, le matériau polyisobutylène comprenant un premier polyisobutylène ayant une masse moléculaire moyenne en poids de 85 000 grammes/mole à 4 200 000 grammes/mole.

7. Ruban adhésif selon la revendication 6, dans lequel le premier polyisobutylène est présent dans une quantité égale à au moins 90 % en poids relativement à un poids total du matériau polyisobutylène.

8. Ruban adhésif selon la revendication 1 ou 2, dans lequel la couche d'adhésif sensible à la pression comprend (a) le matériau polyisobutylène et (b) une résine tackifiante dans une quantité de 0 à moins de 10 % en poids relativement aux matières solides totales de la couche d'adhésif, le matériau polyisobutylène comprenant (i) un premier polyisobutylène ayant une masse moléculaire moyenne en poids de 200 000 grammes/mole à 4 200 000 grammes/mole dans une quantité de 50 % à 90 % en poids relativement à un poids total du matériau polyisobutylène et (ii) un deuxième polyisobutylène ayant une masse moléculaire moyenne en poids de 1 000 grammes/mole à 80 000 grammes/mole dans une quantité de 10 % à 50 % en poids relativement au poids total du matériau polyisobutylène.

9. Ruban adhésif selon la revendication 1 ou 2, dans lequel la couche d'adhésif sensible à la pression comprend (a) le matériau polyisobutylène et (b) une résine tackifiante dans une quantité de 0 à moins de 10 % en poids relativement aux matières solides totales de la couche d'adhésif, le matériau polyisobutylène comprenant (i) un premier polyisobutylène ayant une masse moléculaire moyenne en poids de 300 000 grammes/mole à 4 200 000 grammes/mole dans une quantité de 10 % à 40 % en poids relativement à un poids total du matériau polyisobutylène, (ii) un deuxième polyisobutylène ayant une masse moléculaire moyenne en poids de plus de 50 000 grammes/mole à 250 000 grammes/mole dans une quantité de 50 % à 70 % en poids relativement au poids total du matériau polyisobutylène, et (iii) un troisième polyisobutylène ayant une masse moléculaire moyenne en poids de 1 000 grammes/mole à 50 000 grammes/mole dans une quantité de 10 % à 20 % en poids relativement au poids total du matériau polyisobutylène.

10. Ruban adhésif selon la revendication 1 ou 2, dans lequel la couche d'adhésif sensible à la pression comprend (a) le matériau polyisobutylène dans une quantité de 70 % à 90 % en poids relativement aux matières solides totales de la couche d'adhésif et (b) une résine tackifiante dans une quantité de 10 % à 30 % en poids relativement aux matières solides totales de la couche d'adhésif, le matériau polyisobutylène comprenant (i) un premier polyisobutylène ayant une masse moléculaire moyenne en poids de 100 000 grammes/mole à 4 200 000 grammes/mole dans une quantité de 10 % à 30 % en poids relativement à un poids total du matériau polyisobutylène et (ii) un deuxième polyisobutylène ayant une masse moléculaire moyenne en poids de 30 000 grammes/mole à 75 000 grammes/mole dans une quantité de 70 % à 90 % en poids relativement au poids total du matériau polyisobutylène.

11. Ruban adhésif selon l'une quelconque des revendications 1 à 10, dans lequel le copolymère poly(alkylène) a un poids spécifique de 0,86 à 0,91.

12. Ruban adhésif selon l'une quelconque des revendications 1 à 11, dans lequel chaque couche d'adhésif sensible à la pression est optiquement transparente.

13. Ruban adhésif selon l'une quelconque des revendications 1 à 12, le ruban adhésif comprenant la couche de support, une première couche d'adhésif sensible à la pression adjacente à une première surface principale de la couche de support, et une deuxième couche d'adhésif sensible à la pression adjacente à une deuxième surface principale de la couche de support.

14. Article comprenant :
un premier substrat ; et
un ruban adhésif fixé adhésivement au premier substrat, le ruban adhésif comprenant
(A) une couche de support comprenant un copolymère poly(alkylène) contenant un produit polymérisé d'un premier mélange réactionnel polymérisable comprenant
(1) un premier alcène sélectionné parmi l'éthène, le propène, ou un mélange de ceux-ci ; et
(2) un deuxième alcène sélectionné à partir d'un 1,2-alcène comportant 4 à 8 atomes de carbone,
la couche de support ayant un trouble qui n'est pas supérieur à 5 % et un facteur de transmission lumineuse égal à au moins 85 %, mesuré en utilisant la méthode ASTM D 1003-07 ;
(B) une première couche d'adhésif sensible à la pression qui est adjacente à une première surface principale de la couche de support, la première couche d'adhésif sensible à la pression comprenant un matériau polyisobutylène ; et
(C) une languette qui s'étend au-delà du premier substrat, la traction de la languette entraînant un allongement du ruban adhésif et libérant le ruban adhésif du premier substrat, le ruban adhésif pouvant être allongé d'au moins 50 % dans une première direction sans se rompre quand la languette est tirée.

15. Article comprenant :
un premier substrat ;
un deuxième substrat ; et
un ruban adhésif positionné entre le premier substrat et le deuxième substrat, le ruban adhésif accouplant le premier substrat au deuxième substrat, le ruban adhésif comprenant
(A) une couche de support comprenant un copolymère poly(alkylène) contenant un produit polymérisé d'un premier mélange réactionnel polymérisable comprenant
(1) un premier alcène sélectionné parmi l'éthène, le propène, ou un mélange de ceux-ci ; et
(2) un deuxième alcène sélectionné à partir d'un 1,2-alcène comportant 4 à 8 atomes de carbone,
la couche de support ayant un trouble qui n'est pas supérieur à 5 % et un facteur de transmission lumineuse égal à au moins 85 %, mesuré en utilisant la méthode ASTM D 1003-07 ;
(B) une première couche d'adhésif sensible à la pression qui est adjacente à une première surface principale de la couche de support et une deuxième couche d'adhésif sensible à la pression qui est adjacente à une deuxième surface principale de la couche de support, la première couche d'adhésif sensible à la pression et la deuxième couche d'adhésif sensible à la pression comprenant chacune un matériau polyisobutylène ; et
(C) une languette qui s'étend au-delà d'au moins l'un du premier substrat et du deuxième substrat, la traction de la languette entraînant un allongement du ruban adhésif et libérant le ruban adhésif du premier substrat, du deuxième substrat, ou du premier substrat ainsi que du deuxième substrat, le ruban adhésif pouvant être allongé d'au moins 50 % dans une première direction sans se rompre quand la languette est tirée.
